# EUROPÄISCHE PATENTSCHRIFT

(11) **EP 1 719 603 B1**
(45) Veröffentlichungstag und Bekanntmachung des Hinweises auf die Patenterteilung: **05.08.2015**
(21) Anmeldenummer: 06113408.6
(22) Anmeldetag: 02.05.2006
(51) Int. Cl.: G05B 19/409, B29C 47/92

(54) **Steuerung eines Produktionsprozesses für extrudierte Profilbauteile**
Controlling a production process for extruded profiles
Commande d'un procédé de fabrication de profilés extrudés

(30) Priorität: 02.05.2005 DE 102005020374
(43) Veröffentlichungstag der Anmeldung: 08.11.2006
(73) Patentinhaber: Fraunhofer-Gesellschaft zur Förderung der angewandten Forschung e.V., 80686 München (DE)
(72) Erfinder: Trinkaus, Hans L., 67661, Kaiserslautern (DE); Malschofsky, Ralf, 67716, Heltersberg (DE)
(74) Vertreter: Leonhard, Frank Reimund

(56) Entgegenhaltungen:
- EP-A- 0 125 018
- WO-A-02/095514
- WO-A-2004/005006
- WO-A-2004/093971
- US-A1- 2004 262 799

## Beschreibung

Die Erfindung befasst sich mit einem Verfahren zur Beeinflussung eines Arbeitsprozesses, also einem Herstellungs- und Arbeitsverfahren. Ebenfalls von der Erfindung betroffen ist ein Arbeitsgerät, mit dem diese Prozesse oder dieser Prozess beeinflusst werden kann, in Gestalt einer Displaydarstellung (Anspruch 1, Anspruch 28).

Unter einem Arbeitsprozess ist im Sinne der Erfindung ein Produktionsprozess für ein insbesondere teilkastenförmiges Extrusionsbauteil, wie ein Kabelkanal aus extrudiertem Kunststoff, gemeint. Kabelkanäle sind extrudierte Bauteile, die als profiliertes Endlosprodukt extrudiert werden und nach dem Extrusionsprozess in einzelne Stücke abgelängt werden. Die Steuerung solcher Prozesse ist komplex, ebenso wie die Vielzahl von Einflussgrößen, die auf diesen Prozess Einfluss nehmen kann. Im Rahmen dieses Extrusionsprozesses entsteht das extrudierte Bauteil, beispielsweise der Kabelkanal, als profiliertes U-förmiges Gebilde aus einem Thermoplast. Besonders die aus PVC extrudierten Kabelkanäle haben im Rahmen der Erfindung eine herausragende Stellung. In dem Herstellungsprozess entsteht dieses endlose Extrusionsprodukt zwar einerseits, andererseits ist es auch Teil, Mitglied und Einflussglied in dieser Kette, so dass die Optimierung, die Einstellung, die Voreinstellung, die Steuerung, die Abänderung, ein Probeherstellen oder eine Prozessanalyse nicht allein den Arbeitsprozess, sondern auch den Herstellungsprozess und das in diesem Herstellverfahren produzierte Extrusionsbauteil betreffen. Wenn insoweit von physikalischen Größen dieses Prozesses gesprochen wird, sind das nicht nur Prozessgrößen des eigentlichen Prozesses, sondern auch Produktgrößen des eigentlichen Produkts.

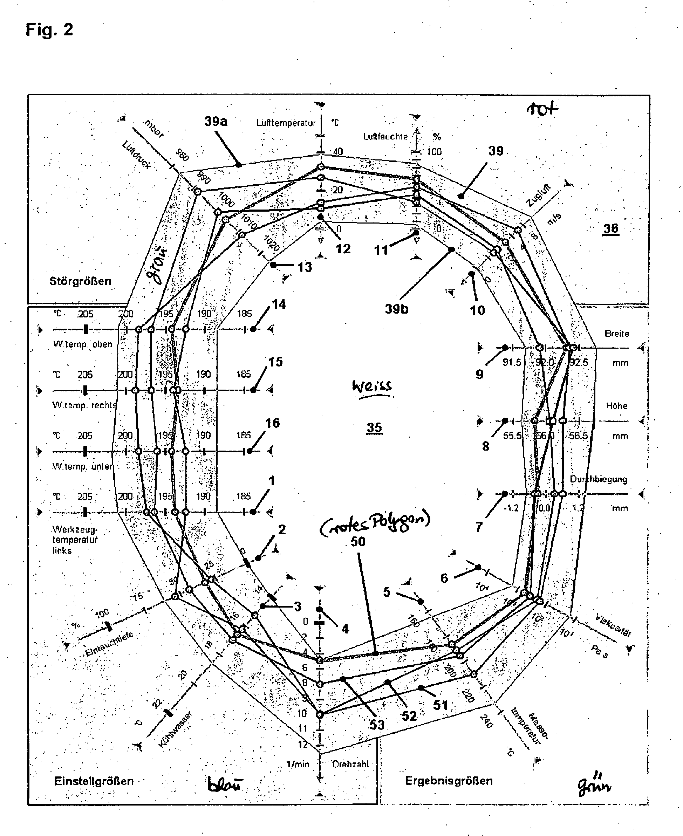

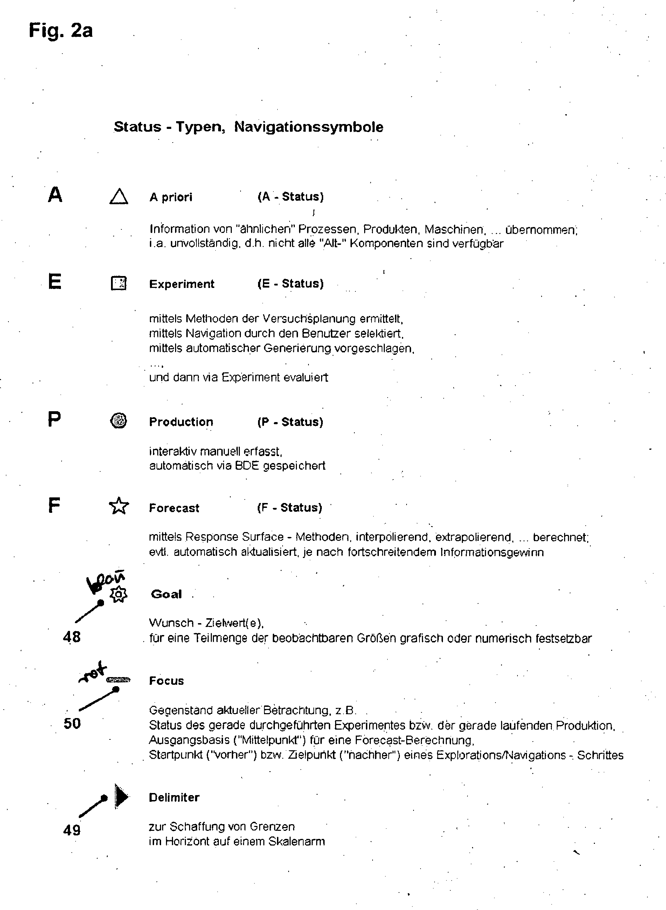

Aus dem Stand der Technik werden Ansatzpunkte zur Lösung von Teilaufgaben bei der Steuerung von Produktionsprozessen bekannt sein, Beispiele hierfür finden sich in EP-A 522 061 (Moldflow). Dort wird der Betrieb einer Spritzgussmaschine optimiert und dabei unmittelbar vorausgegangene "Schüsse" anhand von gemessenen Kennlinien ausgewertet. Die Einstellung der Spritzgießmaschine wird in einem iterativen Prozess vorgenommen, vgl. dort Anspruch 2 und Seite 9, mittlerer Absatz. Andere Steuerverfahren für Extrudiermaschinen sind in DE-A 37 13 400 (Hungaria) und in EP-A 729 822 (Krupp Werner&Pfleiderer) beschrieben. Das erste und das dritte Verfahren arbeiten mit der Einflussnahme von Messkurven, vgl. beispielsweise letztere Schrift in Figur 2, und die Messkurven werden ausgewertet, um Rückschlüsse auf den Produktionsprozess der Extrudiermaschine zu ziehen. Das zweite Verfahren greift auf analytische Methoden zur Berechnung und Steuerung von Prozessparametern zurück.

**Bisherige Verfahren** einer solchen Steuerung benötigen eine Vielzahl von speziellen, eigens für die jeweiligen Anwendungsfälle ausgerichteten Algorithmen, vgl. auch DE-A 102 30 497 (Billion). Umfangreiche Vorarbeiten sind innerhalb jedes Anwendungsbereiches notwendig, so bei der Auswahl und der Entwicklung analytischer Abhängigkeiten zwischen den Prozessparametern, bei deren Anpassung an deren jeweils konkreten Anlagentyp oder an eine jeweils konkrete Anlage. Hinzu kommt die Notwendigkeit der speziellen Justierung von Parametern, welche in jedem Falle durchgeführt werden muss, um die Software für die Prozesssteuerung an eine jeweilige Anlage zu adaptieren. Ferner wird derzeit für beispielsweise die Einrichtung, Einstellung, Überwachung und/oder Steuerung des Extrusionsprozesses jeweils ein eigener Programmcode neu implementiert und evaluiert. Statt eines Programms kann auch der Benutzer die Eingaben - je nach Maschinenkonfiguration - selektiv vergeben, vgl. EP-A 573 912 (Karl Hehl). Oder mit völliger Auswahlfreiheit aus "vorgegebenen Optionen" gemäß US-A 2004/0262 799 (Wang) wählen.

Diese bekannten Lösungsverfahren sind auf die Berücksichtigung weniger Parameter beschränkt. Sie erlauben keine umfassende Einsicht und auch keine Einordnung von Alternativen. Es wird von diesen Verfahren eher der Mikrokosmos gesteuert und geregelt, ohne dem User (Anwender) einen Überblick zu jeweils einer aktuellen Gesamtsituation zu verschaffen. Eine unmittelbare Berücksichtigung von Handlungsfolgen ist nicht ermöglicht.

Die bekannten Lösungsverfahren gestatten es demnach nicht, die Kontrolle oder Steuerung des Prozesses von einer Vielzahl von Parametern gleichzeitig abhängig zu machen und dabei diese Vielzahl von genannten Parametern gleichzeitig zu berücksichtigen.

Die Erfindung hat es sich zur **Aufgabe gestellt,** eine Prozesssteuerung und den aus diesem Arbeits- und Herstellungsprozess stammenden extrudierten und dann vereinzelten Kabelkanal mit einem globaleren Blick auf eine Vielzahl von Einstellparametern und Ergebnisparametern auszustatten. Es soll eine übergeordnete Möglichkeit der Einstellung, Voreinstellung, Überwachung, Steuerung, Abänderung, Optimierung, Probeherstellung und der Analyse möglich sein, anders als das mit singulären Programmen und singulären Steuerungen bisher möglich ist.

Die Erfindung schlägt dazu vor, eine technische Prozessbeeinflussung anhand der eben genannten Vielzahl von Parametern vorzunehmen. Das Verfahren zur Herstellung (Anspruch 1) arbeitet mit zumindest drei Skalenarmen, welche die genannten Möglichkeiten der Prozessbeeinflussung bieten und damit erlauben und ermöglichen. Zumindest ein Ergebnisgrößen-Skalenarm und zumindest zwei eigenständige Einstellgrößen-Skalenarme werden dabei verwendet. Diese werden so auf einer Darstelleinrichtung, also einem Display, einem Monitor oder einem Maschinenbildschirm, dargestellt, dass sie in der Lage sind, dem Benutzer wirkungsmäßig einen Horizont aufzuspannen, der die Prozessbeeinflussung erleichtert und erweitert. Auf den genannten zumindest drei Skalenarmen sind physikalische Größen beziffert aufgetragen.

Zur Begrifflichkeit der Beeinflussung des Prozesses wird auf Seite 11, ab Zeile 5 verwiesen. Sie umfasst jede Art der technischen Einflussnahme auf den Produktionsprozess.

Diese physikalischen Größen gehören zu dem Produktionsprozess und/oder dem endlos extrudierten, lang gestreckten Produktionsbauteil, insbesondere dem im Querschnitt zumindest teilkastenförmigen Kabelkanal als Stück oder als Endlosprofil, und/oder seiner lang gestreckten Deckwand.

In dem extrudierenden Produktionsprozess ist das "lang-gestreckten Extrusionsbauteil" im Folgenden als der im Querschnitt zumindest teilweise kastenförmig ausgebildete, lang gestreckte Kabelkanal, insbesondere mit einer praktisch offenen Deckseite, ein praktisch geschlossener lang gestreckter, im Querschnitt kastenförmiger Kabelkanal oder eine lang gestreckte Deckplatte zum Verschließen der offenen Deckseite des teilweise kastenförmigen Kabelkanal zu verstehen. Diese Begriffsvielfalt ist synonym für das "lang-gestreckten Extrusionsbauteil" verwendet, ohne diese Varianten jeweils mit Oder-Alternativen zu wiederholen.

Die physikalischen Größen sind als qualitative Angabe oder quantitative Angabe definiert (Anspruch 10). Unter diesen Angaben sind physikalische Einheiten, wie Temperatur, Druck des Produktionsprozesses oder Höhe oder Breite des langgestreckten Extrusionsbauteils (Anspruch 11). Unter diesen physikalischen Größen können auch solche qualitativen Angaben sein, die pauschaliert Angaben über den Zustand einer physikalischen Größe geben, hinsichtlich der Feuchtigkeit beispielsweise Angaben, wie 'Trocken', 'Standard' und 'Feucht' oder dem Extrusionsbauteil selbst Angaben, wie 'Hoch', 'Flach' oder 'Normal' (Anspruch 12).

Die so bezifferten Skalenarme liegen nicht aufeinander, sind voneinander beabstandet und haben eine Ausrichtung, die zumindest bei zwei dieser zumindest drei Skalenarmen divergierend ausgerichtet ist. In einem Produktionsprozess werden in der Regel eine Vielzahl mehr Skalenarme vorhanden sein, als die genannte Mindestzahl von drei Skalenarmen, von denen zumindest zwei Einstellgrößen repräsentieren. Unter einer Einstellgröße ist eine solche Größe zu verstehen, die durch eine Einstellung im Produktionsprozess vorgegeben werden kann. Sie tritt dann im Prozess auf, oder sie ist darin messbar. Es herrscht eine unmittelbare Kausalität zwischen der Vorgabe dieser Einstellgröße und der Folge im Produktionsprozess.

Die Einstellgrößen-Skalenarme zum extrudierenden Produktionsprozess repräsentieren zumindest zwei nicht identische und auch nicht linear-abhängige Prozessgrößen des Produktionsprozesses (Anspruch 15).

Unter den genannten zumindest drei Skalenarmen ist zumindest einer, der eine Ergebnisgröße repräsentiert. Im Sinne der eingangs angegebenen Umschreibung der Konnexität von Produkt und Prozess ist diese Ergebnisgröße nicht zwingend nur auf das Produkt zu lesen, sondern sie kann ebenso eine Prozessgröße des Arbeitsprozesses sein. Repräsentiert wird durch diese Ergebnisgröße beispielsweise das Maß einer Wand (Dicke, Abmessung) oder die Viskosität der Schmelze, mit der das Extrusionsbauteil hergestellt wird, oder die Ergebnisgröße repräsentiert eine Temperatur, die im Zuge des extrudierenden Produktionsprozesses entsteht, beispielsweise die Massetemperatur. Die Massetemperatur ist diejenige Temperatur in einem Extrusionsprozess, welche die Schmelze besitzt, aus der das Endlos-Extrusionsbauteil hergestellt wird.

Die beiden genannten Arten von Skalenarmen, diejenige, welche Ergebnisgrößen repräsentieren und diejenige, welche Einstellgrößen repräsentieren, werden als "Kategorien" benannt. Unter den Skalenarmen der Kategorie "Ergebnisgröße" sind alle diejenigen Skalenarme in einem Verfahren oder einer Displaydarstellung zu verstehen, welche als Bezifferung bzw. Skalierung Ergebnisgrößen tragen. Die Skalenarme der Kategorie der Einstellgrößen umfasst alle diejenigen Skalenarme, welche in ihrer Skalierung Einstellgrößen tragen. Die genannten Größen können dabei gemäß obiger Erläuterung (Ansprüche 10, 11 und 12) qualitative oder quantitative Angaben sein.

Es gibt eine weitere Art von physikalischen Größen (Anspruch 13), welche als Vorgaben des Produktionsprozesses angesehen werden können, die aber ebenfalls im Rahmen eines Skalenarms zur Prozessbeeinflussung beitragen. Diese Angaben sind nicht eindeutig der einen oder anderen Kategorie zuzuordnen, es können Ergebnisgrößen sein, wie beispielsweise die Farbe des Extrusionsbauteils, es können aber auch Vorgabegrößen sein, wie das Granulat, die Herkunft des Granulats oder ein Recyclinganteil im Granulat. Diese "technischen Parameter" beeinflussen den Herstellungsprozess durchaus, können bei der Art des Granulats auch als Einstellgröße angesehen werden und sind bei der Farbe des Extrusionsbauteils durchaus so zu verstehen, dass verschiedenfarbige Granulate sich im Produktionsprozess unterschiedlich verhalten, hinsichtlich Zähigkeit, Fließfähigkeit oder Temperatur. Die Farbe ist also keineswegs ein belangloses, technisch nicht relevantes Merkmal, sondern kann im gesamten Produktionsprozess einen erheblichen Einfluss auf die Prozesssteuerung haben.

Die drei genannten Skalenarme, die zumindest vorhanden sein müssten, um eine Horizontaufspannung zu ermöglichen, werden bevorzugt zweidimensional von der Darstellungseinrichtung aufgespannt. Hinsichtlich der Displaydarstellung entsteht auf dem Sichtschirm (dem Display) ein Steuerhorizont, der die Prozessbeeinflussung für einen Benutzer einfach, übersichtlich und mit einer Vielzahl von physikalischen Größen gleichzeitig im Blickfeld habend erlaubt.

Ein erster Horizont wird über die drei Skalenarme vorgezeichnet, sie bilden das Gerippe oder Gerüst für diesen Horizont, der sich optisch gegenüber einem inneren und einem äußeren Umfeld abheben wird. Bei der Displaydarstellung (Anspruch 28) wird diese optische Unterscheidung unmittelbar durch eine kontrastierende Darstellung des Innenraums innerhalb des Horizonts und des inneren und des äußeren Umfelds sichtbar. Im Rahmen des Verfahrens zur Beeinflussung der Herstellung des Extrusionsbauteils, sind die mehreren (zumindest drei) Skalenarme vorhanden, und der von ihnen vordefinierte Rahmen, das Gerippe oder Gerüst, welches die Aufspannung des Horizonts erlaubt. Das ist auf zumindest zwei verschiedene Arten möglich (Anspruch 3, 4 sowie alternativ Anspruch 5).

Die Kontrastbildung des ersten Horizontes kann dabei so geschehen, dass die in einem Prozessrechner (einem Datenspeicher einer Datenbank) gespeicherten Kennwerte einer Vielzahl von Produktionsprozessen alle gemeinsam aufgetragen werden auf den verfügbaren (derzeit dargestellten) Skalenarmen. Dabei wird jeweils ein Prozess so abgebildet, dass er eine Vielzahl von Kennwerten besitzt, die so geordnet sind, dass jeder dieser physikalischen Kennwerte einer der Skalen zugeordnet wird. Eine Verbindung aller Kennwerte ergibt dann ein Linienkörper, bevorzugt ein ebenes Polygon, welches durch eine Verbindung sämtlicher Punkte/Werte, die auf den dargestellten Achsen liegen, entsteht. Dieses Polygon definiert einen Status des Prozesses und beinhaltet auch Bauteilgrößen, nicht nur Prozessgrößen.

Eingangs war dazu angegeben, dass die Konnexität von herzustellendem Bauteil und zugehörigem Arbeitsprozess so miteinander verzahnt ist, dass man bei der hier umschriebenen Erfindung nicht trennt zwischen Prozessgrößen und Bauteilgrößen. Beide sind gleichermaßen Bestandteil der Menge von Kennwerten, die einem "Status" eines Produktionsprozesses zugeordnet werden. Eine Vielzahl solcher Status-Gruppen erlaubt eine entsprechende vielfache Darstellung von vielen Polygonen (Linienkörpern) innerhalb der aktuell dargestellten Skalenarme. Je mehr dieser Polygone dargestellt werden, desto flächiger wird die Darstellung und es bildet sich allein durch die Vielzahl von Polygonen ein Horizont heraus, den das Auge optisch von dem inneren und äußeren Umfeld zu unterscheiden vermag (Anspruch 5).

Die hier umschriebenen "zusammengehörenden Kennwerte" sind diejenigen, die einen Status des Produktionsprozesses und/oder Extrusionsbauteils (eigentlich der ganzen Extrusionsanlage) umschreiben, insbesondere wiederholgenau definieren. Diese Vielzahl der übereinander dargestellten Linienkörper definiert den ersten Horizont (den Primärhorizont), der dadurch kontrastierend hervorgehoben ist. Dies ist wirkungsmäßig (auf den Benutzer oder Betrachter) verstanden gemeint.

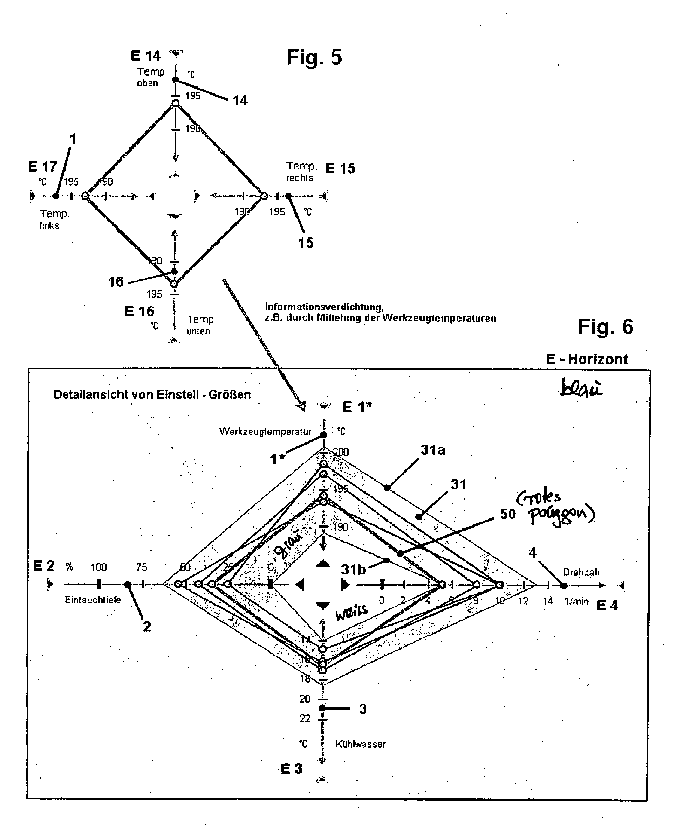

Ohne Vorgabe von Linienkörpern arbeitet eine alternative Darstellungsweise der Hervorhebung des Horizonts (Anspruch 3, 4). Die Menge der Kennwerte des Produktionsprozesses und/oder Extrusionsbauteils werden aus dem Datenspeicher ausgelesen und auf den verfügen Skalenarmen aufgetragen. Dies ist die Vorstufe zur Bildung des genannten Horizonts. Anschließend werden ein äußerer durchgehender Rand und ein innerer durchgehender Rand gebildet, der sich wie von selbst durch alle Maxima bzw. alle Minima der Kennwerte, die auf den Skalenarmen aufgetragen sind, bildet. Innerhalb der beiden Randlinien, also des äußeren Randes und des inneren Randes, wird der Horizont gebildet, der gegenüber dem inneren und äußeren Umfeld kontrastierend hervorgehoben wird. Dies kann im Display durch Farbunterlegung oder durch unterschiedliche Grauwerte geschehen. Die jeweiligen Polygone (die Linienkörper) sind hierbei alle innerhalb des Horizonts vorhanden und die äußeren Begrenzungslinien des Horizonts definieren zusammenhängend keinen Linienkörper, sondern können aus unterschiedlichen Linienkörpern Kennwerte auf den einzelnen Skalenarmen haben; hierzu eingehend die Bedeutung und Herstellung eines solchen Horizonts in WO-A 2004/093971 (Fraunhofer) oder WO-A 2003/038725 (Fraunhofer), dort in der Anwendung für eine IMRT mit dem Horizont nach den dortigen Figuren 5 bis 10.

Zu den zumindest zwei Kategorien als Ergebnisgrößen und Einstellgrößen kann eine weitere Kategorie hinzutreten (Anspruch 14). Diese Kategorie ergänzt und erweitert den Anwendungsbereich der beanspruchten Erfindung, indem auch Störgrößen Berücksichtigung finden, wie beispielsweise äußerer Luftdruck, Lufttemperatur, Luftfeuchte oder Zugluft, die in der Lage sind, den Prozess und/oder das Bauteil nachteilig zu beeinflussen. Ihre Berücksichtigung hängt nicht deterministisch von Einstellwerten ab, ist also nicht direkt veranlasst oder hervorgerufen durch eine Einstellung einer Einstellgröße, kann aber indirekt als Folge einer Einstellung auch entstehen. Störgrößen sind in dem Sinne Einflüsse, welche die Regelungstechnik für solche auf die Regelstrecke einwirkende physikalische Phänomene benennt. Diese zumindest eine Störgröße wird als Skalenarm zusätzlich zu den zumindest drei, bevorzugt vielen anderen Skalenarmen (Anspruch 1) von der Darstellungseinrichtung aufgetragen oder abgebildet (Anspruch 28). Natürlicherweise ist diese Störgröße im maßgeblichen Einfluss auf den Herstellungsprozess orientiert und weniger eine Störgröße des extrudierten Produktbauteils. An ihm sind lediglich die Folgen zu erkennen. In "ganzheitlicher" Betrachtung werden aber wiederum Prozess und Produkt gemeinsam betrachtet.

Wenn die Ansprüche (Anspruch 1, 28) aus der Mischung der zumindest zwei verschiedenen Kategorien (Anspruch 1), oder der drei Kategorien (Anspruch 14) realisiert werden, kann auch zur Verbesserung der Übersicht und der Einschränkung der Komplexität ein Auszug genommen werden und jeweils zumindest ein oder mehrere weitere Horizonte gebildet werden, die aus nur drei Skalenarmen **derselben** Kategorie bestehen (Anspruch 6).

Zumindest drei Skalenarme werden hierzu aus einer Kategorie benötigt, um das Gerüst oder Gerippe für einen solchen Sekundärhorizont zu bilden. Dieser Horizont kann beispielsweise ein Ergebnisgrößen-Horizont sein (Anspruch 7), der kontrastierend gegenüber einem inneren und äußeren Umfeld dargestellt wird. Ebenso ist ein Sekundärhorizont der Kategorie Einstellgrößen (Anspruch 8) oder der Kategorie Störgrößen (Anspruch 9) vorteilhaft.

Für die kontrastierende Wirkung eines Sekundärhorizonts können die zum Primärhorizont gemachten Ausführungen übernommen werden (Anspruch 3, 4 oder alternativ Anspruch 5). Die kontrastierende Wirkung entsteht entweder durch Helligkeitsunterschied oder Farbunterschied im Sekundärhorizont, oder alleine durch die Anwesenheit einer Vielzahl von Linienpolygonen (Linienkörpern). Sie geben dem Benutzer und Betrachter den visuell kontrastierend wirkenden Eindruck, dass durch die Vielzahl dieser Polygone, die sich zum Teil schneiden und übereinander liegen, eine zwischen den Skalenarmen nicht zwingend geradlinig begrenzte (berandete) "Fläche" entsteht, die man von dem inneren und äußeren Umfeld ohne weiteres und ohne weitere Maßnahmen zu unterscheiden vermag.

Der Begriff des "kontrastierenden Sekundärhorizonts" ist also wirkungsmäßig gemeint (bezogen auf den Betrachter als "User").

Die Anzahl der Skalenarme in einem solchen Sekundärhorizont ist auf zumindest drei, bevorzugt aber mehr solcher Skalenarme, bezogen. Sie bilden eine Untermenge der Vielzahl von Skalenarmen, die im Haupthorizont (Primärhorizont) vorgesehen sind, wo Skalenarme aus zumindest zwei, bevorzugt drei Kategorien (Einstellgrößen, Ergebnisgrößen, Störgrößen) in großer Zahl aufgetragen sind. Die praktische Erfahrung zeigt, dass es mehr Einstellgrößen und Ergebnisgrößen als Skalenarme geben wird als Störgrößen. Einflussnahmen auf den Prozess und im Prozess entstehende physikalische Größen und am Bauteil entstehende physikalische Parameter sind zur Steuerung des Prozesses bevorzugt in einer Vielzahl vorzusehen, Störgrößen sind eher solche Skalenarme, die man berücksichtigen kann, die aber für die Einflussnahme auf den Prozess nicht unmittelbar gesteuert werden können. Sie bilden in Summe mit den anderen Kategorien aber die Qualität und die Eigenschaft des Prozesses ab, erlauben Rückschlüsse auf die vorteilhafte oder nicht vorteilhafte Einstellung eines ausgewählten Polygons aus der Vielzahl von Polygonen und sollten nicht unberücksichtigt bleiben.

Eine Vielzahl von Einstellgrößen und eine Vielzahl von Ergebnisgrößen (Anspruch 1 und 28, vgl. auch Anspruch 15) soll so verstanden werden, dass natürlich drei, vier und viele weitere Einstellgrößen-Skalenarme vorgesehen sein können, ebenso wie zwei, drei und viele weitere Ergebnisgrößen-Skalenarme eingesetzt werden können. Auch zwei, drei und mehrere Störgrößen-Skalenarme sollen offenbart sein, so dass deren Vielzahl von möglichen Kombinationen nur durch die angegebene Untergrenze in den Ansprüchen 1, 28 und 14 repräsentiert ist.

Je größer die Anzahl der verwendeten Skalenarme ist, desto größer die Übersicht über den Gesamtprozess und umso weit reichender die aus der Steuerung fließenden Rückschlüsse und Einstellmöglichkeiten.

Nachdem bekannte Verfahren nur stationäre Produktionsprozesse überwachen und steuern können, und dieses auch nur eingeschränkt, erlauben sie keinen kontrollierten Übergang von einem aktuellen (quasi stationären) Prozessstatus zu einem neuen, vom Bediener angestrebten stationären Prozessstatus, ohne dass die laufende Produktion unterbrochen wird. Mit der beanspruchten Erfindung kann dieser neue Prozessstatus aus den genannten Horizonten entwickelt werden, und zwar unter Vorgabe von spezifischen Wunscheigenschaften oder spezifischen Wunschbereichen (Steuerverfahren nach 'Cluster', nach 'Goal' oder nach 'Forecast').

Im ersten Primärhorizont oder in den zumindest drei möglichen Sekundärhorizonten kann ein neuer Prozessstatus herausentwickelt werden, ohne dass die laufende Produktion zum bisherigen Prozess und zum bisher hergestellten Produkt gestoppt oder längerfristig unterbrochen werden muss. Es sind auch keine Probeprozesse oder Testläufe notwendig, um eine neue Einstellung eines Prozessstatus zu erproben. Diese Erprobung und Auswahl geschieht vielmehr bereits innerhalb der genannten Horizonte, welche eine Vielzahl von verschiedenen Prozessstatus' dem Benutzer zur Verfügung halten, und diese Vielzahl auch übersichtlich darstellen.

Beim Steuerverfahren nach 'Forecast' werden die bereits vorliegenden Prozessstatus um weitere, neu berechnete Prozessstatus ergänzt, die beispielsweise in einer Nachbarschaft des aktuell betrachteten Status ('Focus-Polygon') liegen und insbesondere auch die bisherigen Horizonte erweitern können .

Für diese "adaptive" Prozessexploration werden zusätzliche Forecast-Prozessstatus' berechnet. Sie sind zumindest approximativ. Verwendet werden dazu in einer Datenbank gespeicherte (mehrere) Prozessstatus'. Diese sind für die Prozessexploration als bekannt anzunehmen. Gleiches gilt für die Displaydarstellung zur Prozessbeeinflussung.

Bisherige Verfahren zur Überwachung und Steuerung von Produktionsprozessen sind außerdem nicht in der Lage, unvorhersehbar auftretende Störgrößen mit unerwünschten Auswirkungen auf das Produkt oder den Prozess durch entsprechende Veränderungen der Einstellgrößen automatisch zu kompensieren. Geeignete Lösungsvorschläge werden auch nicht interaktiv unterbreitet. Gleiches gilt für das Auftreten dynamischer Veränderungen des nicht unmittelbar beobachtbaren Systemkerns. Hierunter fallen verdeckte Änderungen im Herstellprozess, die von außen nicht unmittelbar ersichtlich sind, sondern sich nur in ihrer Wirkung manifestieren. Diese Störgrößen zu kompensieren, verlangt einen hohen Erfahrungsschatz und eine genaue Kenntnis des Herstellungsprozesses, um gezielt durch Änderung einer Einstellgröße auf die Veränderung im Systemkern Einfluss zu nehmen. Messbar ist die Änderung im Systemkern dabei nicht, messbar ist nur das von diesem veränderten Kern ausgehend geänderte Produkt.

Auch hier bieten bisherige Verfahren keine einfache, allgemein anwendbare Vorgehensweise zur automatischen Identifizierung von dynamischen Systemveränderungen und zur Generierung von entsprechenden Möglichkeiten zur Kompensation.

Mit der hier vorgeschlagenen und beanspruchten Steuerung als "Prozessbeeinflussung" benötigt man keine mathematischen, chemischen, physikalischen oder sonstige Modellierungen von Prozessen. Es müssen keine analytischen Lösungen gefunden werden, es müssen keine funktionalen Darstellungen von Abhängigkeiten erfolgen und auch keine Simulationsobjekte konstruiert und konfiguriert werden.

Die Erfindung verwendet ein "Process-memory" (Prozessspeicher) und kann damit auch implizites Vorab-Wissen (a-priori) verwenden.

Die Erfindung kombiniert automatische, sukzessive Datenbank-Speicherung, innovative Datenbank-Exploration (interaktiv, graphisch oder tabellarisch), aktiv durchgeführte oder passiv aufgezeichnete Versuchs-Designs und Versuchs-Evaluationen, stets aktualisierbare Forecast-Berechnungen, graphisch-metrische Datenbank-Operationen, automatische oder interaktive Überprüfungs-, Identifikations- und Steuerungsprozeduren und intuitiv bedienbare, ergonomische und transparente Visualisierungen.

Objektorientierung und Algorithmik ermöglichen Reaktionen auf alle im Prozess auftretenden Ereignisse in Echtzeit.

Die beanspruchte Erfindung ist somit sowohl off-line einsetzbar, wie auch on-line verwendbar. Analysen und Simulationen können off-line durchgeführt werden. On-line können unmittelbare Systemüberwachung oder automatische Störungsidentifikation vorgenommen werden. Daraus leiten sich entsprechend ermittelte Prozess-Beeinflussungen ab, wobei die Ermittlung der Art und des Wesens der jeweiligen Prozessbeeinflussung im Rahmen des beschriebenen zumindest einen Horizontes und der verschiedenen Kategorien von Skalenarmen erfolgt (Anspruch 1).

Alle Programmmodule können autark ablaufen, bei Bedarf aber auch interaktiv zur Steuerung des Prozesses eingesetzt werden.

Die interaktive Einsatzmöglichkeit kann sich erweitern bis hin zu einem vollständig automatischen Ablauf, in dem der Produktionsprozess durch die im Horizont vorgegebenen Grenzen oder Grenzintervalle überwacht, gesteuert und ordnungsgemäß gehalten wird. Auch dies ist eine Prozessbeeinflussung.

Diese Möglichkeiten der Steuerung, der Abänderung, der Optimierung, der Probeherstellung, der Analyse, der Einstellung, Voreinstellung und Überwachung soll allgemein mit "Steuerung" benannt werden, die eine Prozessbeeinflussung beinhaltet. Mit anderen Worten kann dies auch als "Einflussnahme" auf den Prozess umschrieben werden. Unter diesen Einflussnahmen finden sich auch die folgenden
- Auslegungen einer Produktionsmaschine und/oder Produktionsanlage für das extrudierende Herstellen eines Extrusionsbauteils, bevorzugt aus Kunststoff.
- Gleichzeitige Berücksichtigung beliebig vieler Charakteristiken des Prozesses oder des extrudierten Bauteils.
- Einstellung einer Produktionsmaschine und/oder Produktionsanlage unter gleichzeitiger Berücksichtigung aller aktuellen Anforderungen.
- Optimierung im vorgenannten Sinne, insbesondere auch unter Verwendung zusätzlich neu berechneter Näherungen für mögliche Prozessstatus.
- Überwachung und/oder Steuerung eines Produktionsprozesses, insbesondere auch unter Berücksichtigung nicht beeinflussbarer Störgrößen und dynamischer Systemänderungen, bezüglich beliebig wählbarer Prozessparameter in interaktiver Weise.
- Vorgenanntes auch automatisch, ohne (menschliche) Interaktion, mit unmittelbarer Steuerung über zumindest einen der Horizonte des Produktionsprozesses.

Mit der Erfindung kann bei zumindest den vorgenannten Aktivitäten nach beliebig wählbaren Parametern, wie Materialmischung, Materialdurchsatz, Prozessgeschwindigkeit, Prozessstabilität, Produktausbeute, Produktqualität, Gesamt- oder Detailkosten, optimiert werden. Diese Optimierung kann in den unterschiedlichsten Detaillierungsgraden erfolgen. Selbst gegenläufige Kriterien können transparent abgewägt werden.

Mit der Erfindung wird erreicht, extrudierende Produktionsprozesse für Extrusionsbauteile zu verbessern, hinsichtlich der Qualität des Produkts, der Sicherheit des Produktionsprozesses und der Kontrolle des Produktionsprozesses. Ausgeschöpft werden dabei verfügbare Einsparpotentiale, Produktionsausschuss wird verringert und Stillstandzeiten können eingedämmt werden. Ressourcenverbrauch wird reduziert, ebenso wie Emissionen. Zeit- und Kostenvorteil werden aufgrund vorausschauender Wartung möglich.

Eine besonders schnelle Reaktion im Sinne einer unmittelbaren Anpassung der Prozessparameter ist für schnell wechselnde Bedarfsszenarien möglich. Eine Änderung des Prozesses erfolgt praktisch schlagartig (sofort), ohne notwendige Rüst- und Einstellzeiten.

Für das Arbeiten in den Horizonten sind derzeit drei unterschiedliche Arbeitsweisen vorgesehen, die durch den Benutzer sowohl mittels grafischer Interaktion via Zeigegerät, wie "Mauszeiger", als auch mittels alphanumerischer Eingabe via Tastatur, bspw. als Touchpanel, durchgeführt werden können.

Bei einem ersten Steuerungsverfahren nach "Cluster" (Anspruch 17,18) wird eine Teilmenge der im Prozess-Speicher vorliegenden Prozessstatus' selektiert. Diese Auswahl erfolgt im Allgemeinen sukzessive, mit dem Ziel einer Herausarbeitung und Analyse von aktuell in Frage kommenden Prozessstatus', welche die vom Benutzer gewünschten Vorgaben bezüglich der Kennwerte von Einstell-, Ergebnis- oder Störgrößen berücksichtigen.

Die dabei fortschreitende Verringerung der Anzahl aktuell im Blickpunkt des Interesses stehender Status' bzw. Linienkörper ermöglicht dem Benutzer eine Konzentration auf für ihn wesentliche Kriterien, da damit nur noch die Kennwerte weniger, "benachbarter" Status' miteinander in Bezug gebracht werden müssen. Die mit dieser stufenweisen Vorgehensweise verbundene zunehmende Transparenz entspricht gleichsam einem "Zoom" in Details des Arbeits- oder Produktionsprozesses, insbesondere auch durch die (möglicherweise alternierende) getrennte oder gemeinsame Betrachtung von geclusterten Linienkörpern in den jeweiligen (auch mehreren) sekundären Horizonten.

Beim Steuerungseinfluss nach "Cluster" durch das Platzieren eines oder mehrerer grafischer Symbole mittels eines Zeigers auf einem oder mehreren der Skalenarme werden (im mathematischen Sinne) Schranken für die Kennwerte auf den jeweiligen Skalenarmen gesetzt. Die Berücksichtigung dieser Restriktionen bewirkt eine Auswahl zulässiger Prozessstatus', und die dadurch selektierte Teilmenge der verbliebenen Linienkörper kann dann zur besseren visuellen Darstellung als kontrastierender Korridor hervorgehoben werden. Innerhalb dieser restringierten, besser überschaubaren Teilmenge ist dann (außerhalb der beanspruchten Erfindung) eine einfache Abwägung von alternativen Prozessstatus' möglich. Der Nutzer hat somit ein Werkzeug bei der Hand, das auch beansprucht ist, mit dem er die Grundlage hat, sich für einen neuen, "besseren" Prozessstatus zu entscheiden und eine entsprechende Änderung der Betriebseinstellungen der Produktionsanlage vorzunehmen.

Bei dem Steuerungsverfahren nach "Cluster" kann ebenso auch mittels Tastatureingaben gearbeitet werden (Anspruch 18). Dazu werden in Eingabefelder von "Lower/Upper Bounds"-Spalten frei wählbare Kennwerte für die gewünschte Einschränkung der jeweiligen physikalischen Größe eingegeben. Die Auswirkungen dieser Eingaben können unmittelbar in der aktualisierten Grafik verfolgt und interpretiert werden. Umgekehrt hat auch das oben angegebene Platzieren eines grafischen Delimiter-Symbols (Anspruch 17) die Aktualisierung des entsprechenden Tabellenfeld-Inhaltes zur Folge.

Je nach den speziellen Bedürfnissen des jeweiligen Nutzers wird sich die Verwendung grafischer Symbole, die Verwendung der Tatstatur oder eine Mischung der Verwendung beider Methoden als vorteilhafter für die jeweilige Anwendungssituation herausstellen.

Ein alternatives oder ein kumulatives weiteres Steuerungs-Verfahren nach "Goal" (Anspruch 19, 20) ist angezeigt, wenn der Nutzer bezüglich eines Kennwertes oder einer Gruppe von Kennwerten eines angestrebten Prozessstatus relativ präzise Wunschvorstellungen (daher die Bezeichnung "Goal") hat, die zumindest näherungsweise realistisch werden sollten (sowohl als Einzelwerte, als auch als gemeinsame Gruppen-Kennwerte eines Status). Diese "Goal"-Werte werden i.A. auf Abschnitten der Skalenarme innerhalb der Entscheidungshorizonte liegen, sie müssen aber nicht notwendig mit Kennwerten übereinstimmen, die im Prozess-Speicher gespeichert sind.

Der Nutzer kann auch hierbei das Setzen von Goals auf zwei Arten vornehmen: Einerseits durch das Platzieren eines oder mehrerer grafischer Symbole (Anspruch 19) mittels eines "Zeigers" auf einem oder mehreren der Skalenarme, andererseits durch die Eingabe der gewünschten Kennwerte (Anspruch 20) als Vorgabe der jeweiligen physikalischen Größe mittels der Tatstatur.

Das Aktivieren einer Schaltfläche startet nun eine Suche im Prozess-Speicher nach Prozessstatus', die zu dem i.A. nicht bezüglich aller Kennwerte vorgegebenen Goal-Status "ähnlich" oder "benachbart" sind. Diese Such-Anfrage an den Prozess-Speicher setzt das Vorliegen bzw. die Definition eines Ähnlichkeitsmaßes (einer Metrik) auf der Menge der Prozessstatus' voraus. Eine Fülle von Ähnlichkeitsmaßen ist aus der Mathematik bzw. aus der Versuchsplanung bekannt, die Auswahl oder Definition eines geeigneten Maßes richtet sich nach den jeweiligen Bedürfnissen oder Kenntnissen des Nutzers. Bei der Suche nach den Prozessstatus', welche die Goal-Vorgaben approximieren, können die oben genannten Restriktionen (Delimiter bzw. Lower/Upper Bounds) wahlweise zusätzlich berücksichtigt oder ignoriert werden.

Die Anzahl x der "Antworten" auf die Such-Anfrage, d.h. die x im Prozess-Speicher selektierten Prozessstatus' mit den y (≤ x) kleinsten Abstandswerten zum "Goal", ist ebenfalls vom Nutzer wählbar. Die x Resultate können in den Entscheidungshorizonten als Linienkörper kontrastierend hervorgehoben werden, sie können parallel dazu auch in einer Tabelle in ihrer Reihenfolge entsprechend sortiert und hervorgehoben dargestellt werden.

Als Basis, aktueller Ausgangspunkt oder Mittelpunkt für das oder ein weiteres Steuerungsverfahren nach "Forecast" (Anspruch 23) dient ein "Focus"-Polygon. Dessen Auswahl, Markierung oder grafische Hervorhebung kann wiederum via Tatstatureingabe oder grafischer Interaktion erfolgen. Dabei erhält durch Eingabe oder Auswahl der Datensatz-Nummer (bspw. mittels Scroll-Funktion) ein in der Datenbank gespeicherter Prozessstatus den Focus (Anspruch 22). Alternativ kann dies durch das Markieren einer Gruppe zusammengehörender, linienförmig miteinander verbundener Kennwerte in einem der Entscheidungshorizonte mittels eines "Mauszeigers" erfolgen (Anspruch 21). Das Focus-Polygon wird daraufhin grafisch hervorgehoben in den Entscheidungshorizonten angezeigt, gleichzeitig werden dessen Kennwerte in einer Tabelle gekennzeichnet und in der zugehörigen Focus-Spalte dargestellt.

Das so festgelegte Focus-Polgon mit dem zugehörigen Prozessstatus dient nun als Zentrum für eine darauf aufbauende Erzeugung von "virtuellen" Prozessstatus' in dessen Nachbarschaft, mit dem Ziel, den Prozess-Speicher um zusätzliche, i.A. approximative Prozessstatus' zu erweitern (Anspruch 23). Die Linienkörper dieser neu generierten, gleichsam aus der "Keimzelle" Focus-Polygon hervorgegangenen, Prozessstatus' können innerhalb der bereits bekannten Entscheidungshorizonte liegen. Sie können jedoch durchaus auch, zumindest bezüglich einiger der Skalenarme, über die bisherigen Grenzen hinausragen - was für eine Exploration neuer, alternativer Prozessstatus' einsetzbar ist.

Das Aktivieren einer vorgesehenen Schaltfläche "Forecast" startet die Berechnung von zumindest einem Forecast-Polygon. Dabei kommen bekannte Verfahren der Mathematik, insbesondere aus dem Gebiet der Versuchsplanung (Response-Surface-Methods), zur Anwendung. Auch hier, bei der Generierung approximativer, zusätzlicher Prozessstatus', können die Restriktionen (Delimiter bzw. Lower/Upper Bounds) wahlweise zusätzlich berücksichtigt oder ignoriert werden. Das gilt ebenso für die Displaydarstellung.

Wie beim erstgenannten Steuerungsverfahren nach "Goal" ist hier ebenfalls die Anzahl x' der gewünschten Forecast-Polygone vom Nutzer wählbar. Darüber hinaus kann hier ein Wert für die Schrittweite bzw. Distanz gewählt werden, der ebenso im Sinne des oben bereits erwähnten Ähnlichkeits- bzw. Abstandsmaßes als Grundlage für die Berechnung der Forecast-Prozessstatus' und deren "Nähe" zueinander dient. Die x' Resultate können wiederum in den Entscheidungshorizonten als Linienkörper kontrastierend hervorgehoben werden, sie können parallel dazu auch in der Tabelle in ihrer Reihenfolge entsprechend sortiert und hervorgehoben dargestellt werden.

Eine Analyse der somit generierten Forecast-Prozeßstatus' kann nun wiederum mit einem der Verfahren "Cluster" bzw. "Goal" erfolgen. Diejenigen Prozessstatus', deren Kennwerte dabei eine Verbesserung hinsichtlich der Wünsche des Nutzers versprechen, können dann als Grundlage für durchzuführende Prozesseinstellungen dienen.

Ergänzt oder überlagert zu dem ersten Horizont wird ein sich optisch abhebender Forecast-Horizont dargestellt. Dies erfüllt die Darstellungs-Einrichtung. Zusätzlich berechnete Forecast-Prozessgrössen-Werte stehen dann für eine adaptive Prozessexploration in einem künftigen Prozesseinfluss zur Verfügung.

Eine tatsächliche technische Überprüfung solcher Prozessstatus' wird durch entsprechendes (auch automatisiertes) Setzen der Kennwerte in den Einstellgrößen vorgenommen, die Messung oder Beobachtung der tatsächlich resultierenden Kennwerte in den Ergebnisgrößen kann schließlich der Bewertung der Forecast-Polygone dienen. Diese Vorgehensweise von vorausschauender Erzeugung und Analyse hypothetischer Prozessstatus' und daran anschließender, explorierender Verifikation von geeignet erscheinenden Prozessstatus'-Alternativen kann in mehreren Schritten voranschreiten. Dies kann in der Durchführung eigenständiger Produktions-Experimente oder aber in kleinen Schritten innerhalb eines aktuell laufenden, realen Produktionsprozesses erfolgen.

Die beanspruchte Erfindung wird durch mehrere Ausführungs**beispiele** in einem technischen Umfeld, in die sie eingebettet ist, erläutert und ergänzt.
- **Figur 1**: veranschaulicht eine Übersicht über eine Extrusionsanlage zur Herstellung eines extrudierten Kabelkanals 20* oder abgelängter Stücke 20 davon. Vergleichbar dazu auch die Herstellung der jeweils korrespondierenden lang-gestreckten Deckenwand.
- **Figur 1a**: ist eine schematische Perspektivansicht eines vorderen Abschnitts eines Kabelkanals 20 aus extrudiertem Kunststoff.
- **Figur 2**: ist eine Ansicht eines Primärhorizonts 39 mit vier eingezeichneten Polygonen 50 bis 53. Die Angabe farbiger Abschnitte bezieht sich auf später verwendete Kategorien mit gleicher Farbe.
- **Figur 2a**: veranschaulicht vier Arten von Poylgonen, A-Polygone, E-Polygone, P-Polygone und F-Polygone, sowie Arten zur Gewinnung eines Arbeitszustandes der Extrusionsanlage nach Figur 1, nach "Goal" oder nach "Delimiter", ausgehend von einem Focus-Polygon.
- **Figur 3**: veranschaulicht den Horizont von Figur 2, ohne Kennzeichnung der drei Kategorien Störgrößen, Einstellgrößen und Ergebnisgrößen.
- **Figur 3a**: veranschaulicht den Horizont von Figur 3, wobei durch die Vielzahl der Linien allein der Horizont (als ein umlaufendes "Band") bereits kontrastierend hervorgehoben ist.
- **Figur 3b, Figur 3c**: veranschaulichen je einen ersten Sekundärhorizont als Störgrößen-Horizont. Dabei beschränkt sich Figur 3b auf die kontrastierende Hervorhebung 33 durch mehrere Polygone. In Figur 3c ist ein Horizont zusätzlich durch eine flächige Hinterlegung 33a kontrastierend hervorgehoben.
- **Figur 4**: veranschaulicht einen zweiten Sekundärhorizont als Ergebnisgrößen-Horizont 32 (G-Horizont) aus Figur 2. Die Farben (in Worten eingefügt) legen korrespondierende Abschnitte fest.
- **Figur 5**: veranschaulicht einen Ausschnitt von mehreren Temperaturwerten auf den Skalenarmen 1, 14, 15, 16 von Figur 2.
- **Figur 6**: veranschaulicht einen dritten Sekundärhorizont 31 aus Einstellgrößen (E-Horizont), entnommen aus Figur 2. Einer der Skalenarme enthält eine Mittelwertbildung aus Figur 5.

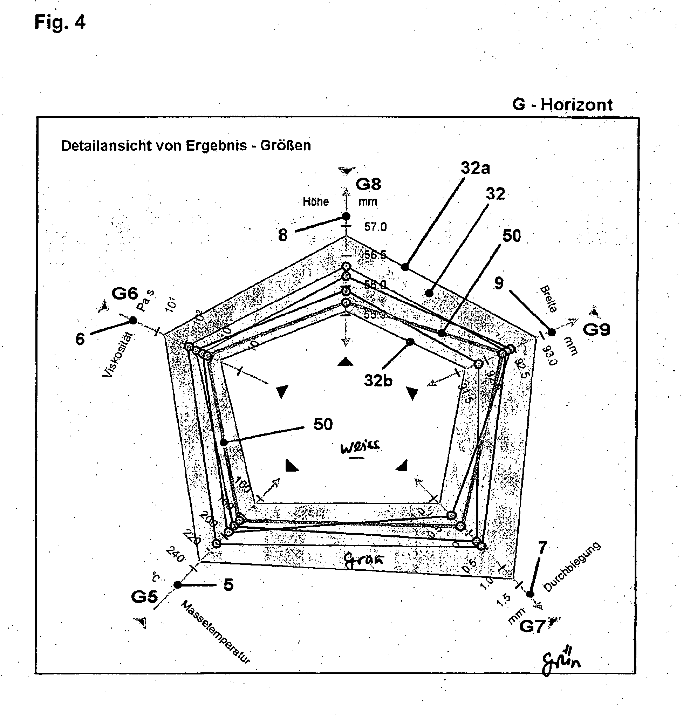

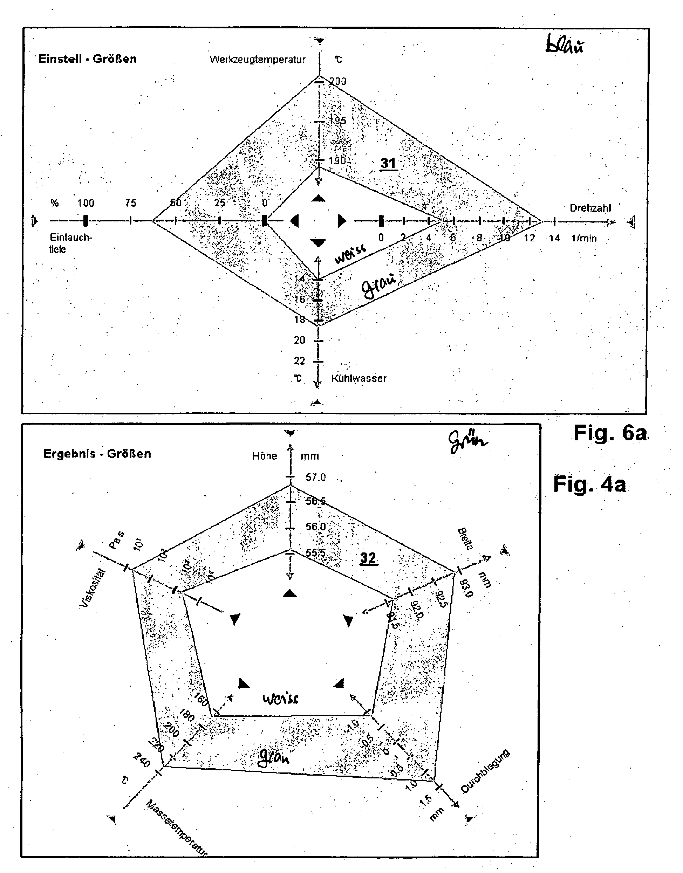

- **Figur 4a, Figur 6a**: veranschaulichen Sekundärhorizonte 31 und 32 der Kategorie "Einstellgrößen" und der Kategorie "Ergebnisgrößen", ohne Herausstellung der einbeschriebenen Polygone, die den jeweiligen Sekundärhorizont aufspannen. Die farbige Unterlegung korrespondiert mit Figur 2 (blau, grün, rot).

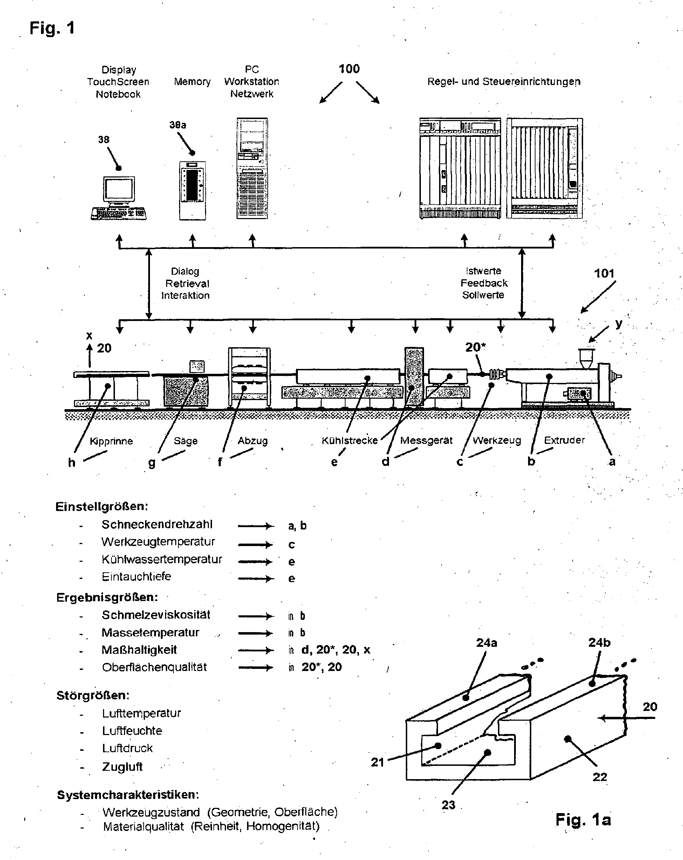

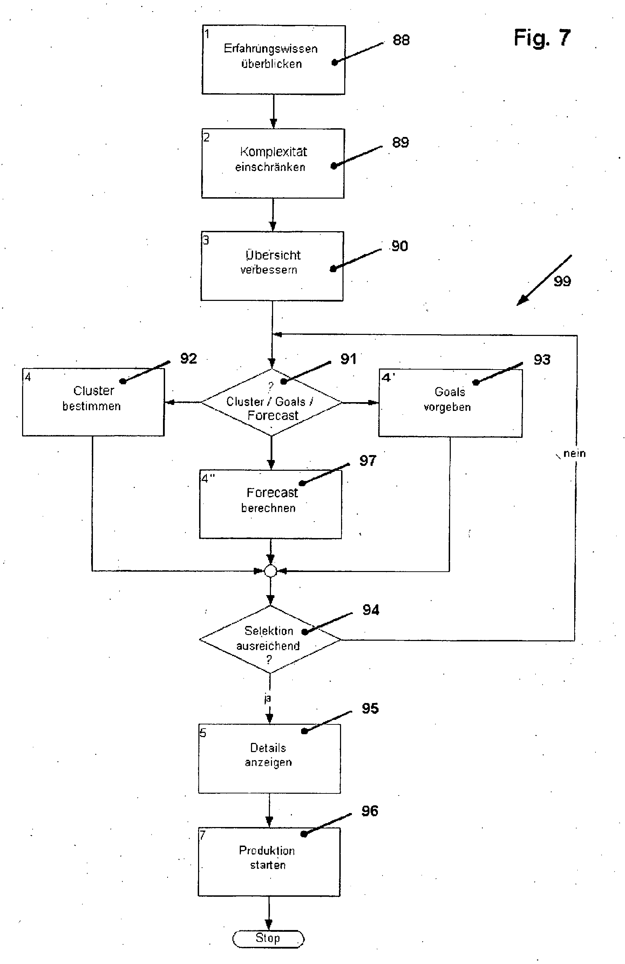

- **Figur 7**: veranschaulicht einen Ablaufplan (schematisch) zur Bestimmung eines neuen Arbeitszustandes mit interaktiver Prozessbeeinflussung der Anlage nach Figur 1.

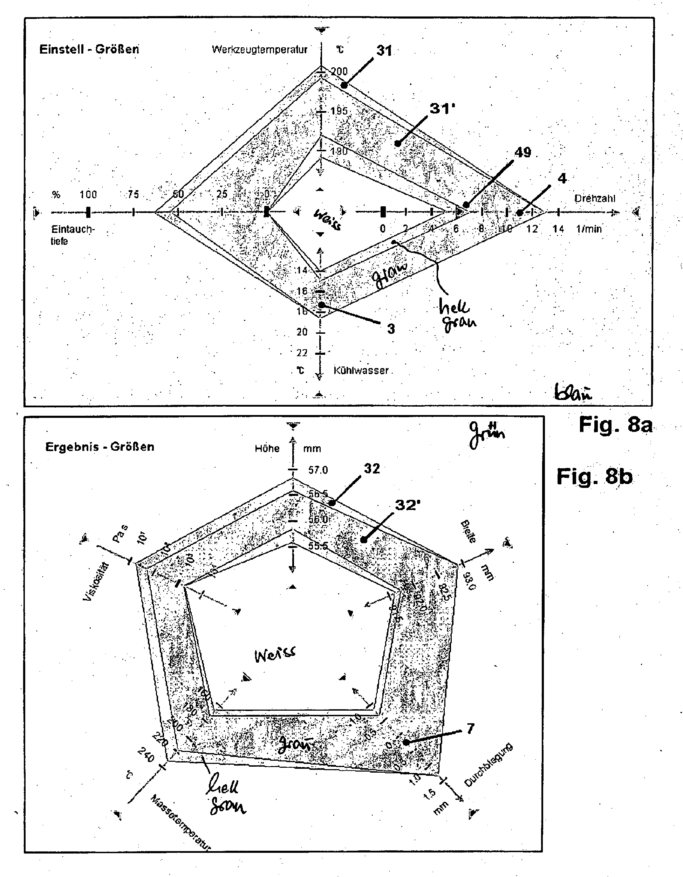

- **Figur 8a, Figur 8b**: veranschaulichen einen Zwischenzustand im Arbeitszustand nach Schritten 91, 92 von Figur 7, mit flächiger Hervorhebung von Korridoren 31',32', die aufgrund von gesetzten Restriktion 49 als Teilmengen der Horizonte 31,32 verbleiben.

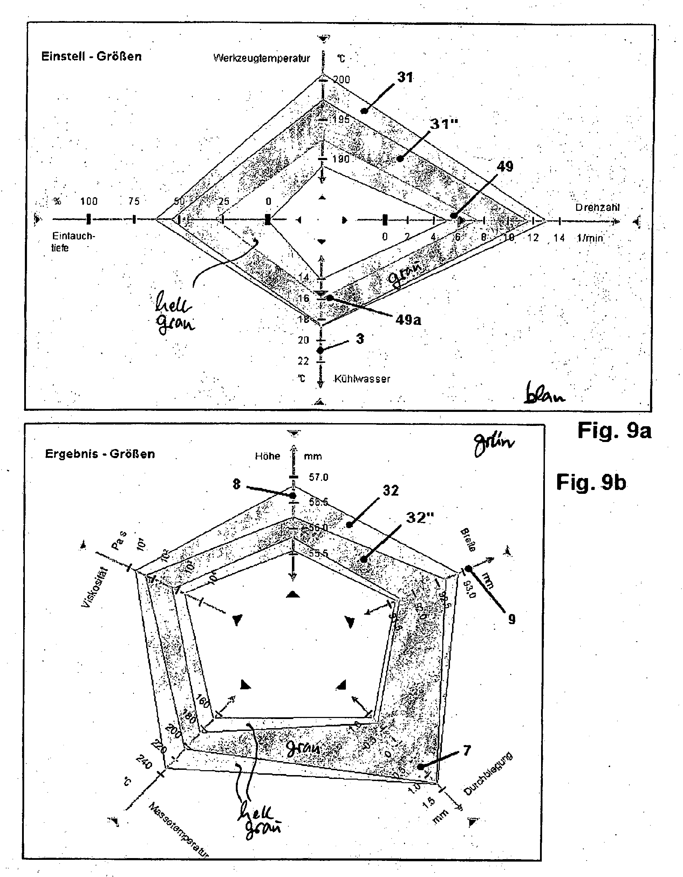

- **Figur 9a, Figur 9b**: veranschaulichen einen weiteren Zwischenzustand im Verfahrens-Ablaufschritt 92.

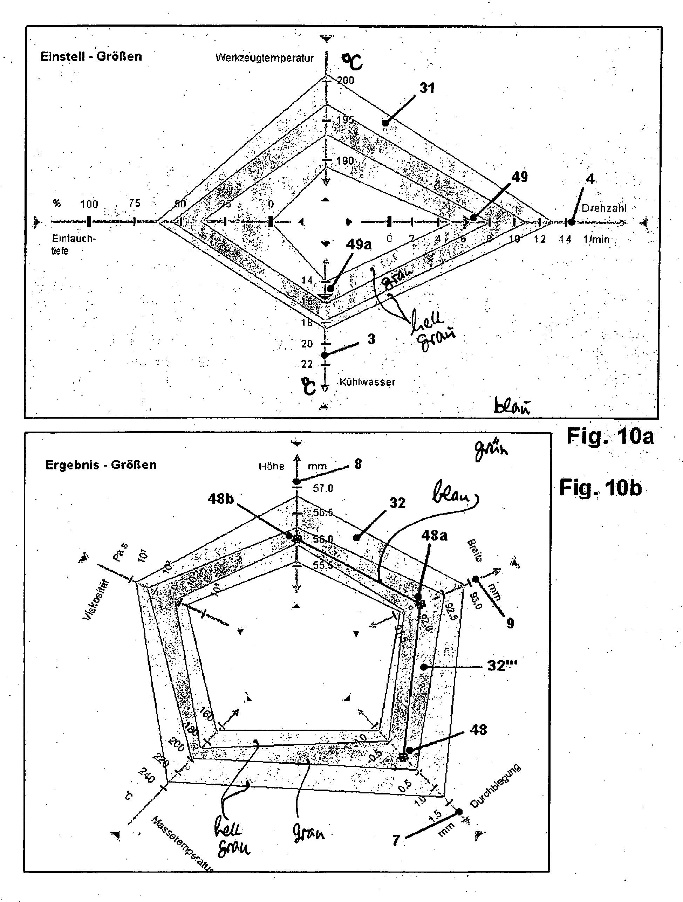

- **Figur 10a, Figur 10b**: veranschaulichen einen Zwischenzustand im Ablaufschritt 93 von Figur 7, alternativ oder kumulativ zum Verfahrensschritt 92.

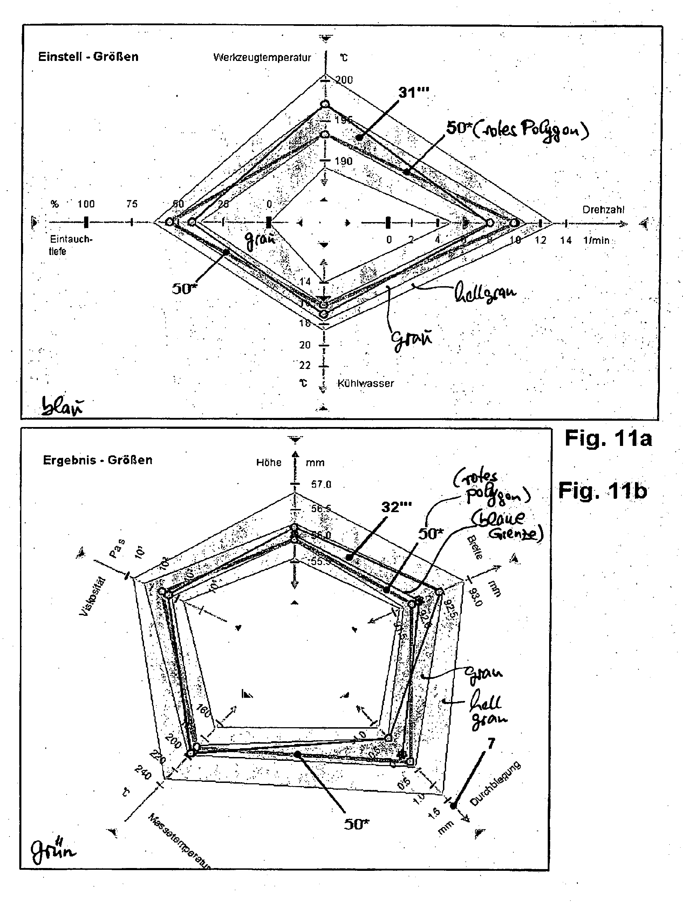

- **Figur 11a, Figur 11b**: veranschaulichen den Zwischenzustand von Figur 10a und 10b, jetzt wieder mit Herausstellung einiger einbeschriebener Status-Polygone.

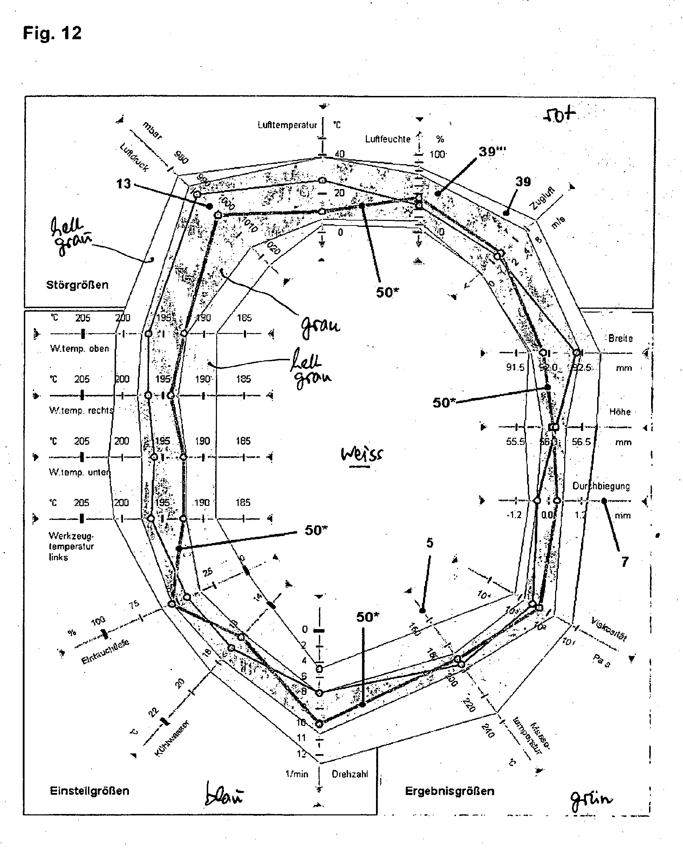

- **Figur 12**: veranschaulicht eine Detailansicht des mit den Arbeitsschritten 91 bis 94 aus den Figuren 8a bis 11b erhaltenen Ergebnisses, repräsentiert durch ein Polygon 50*.

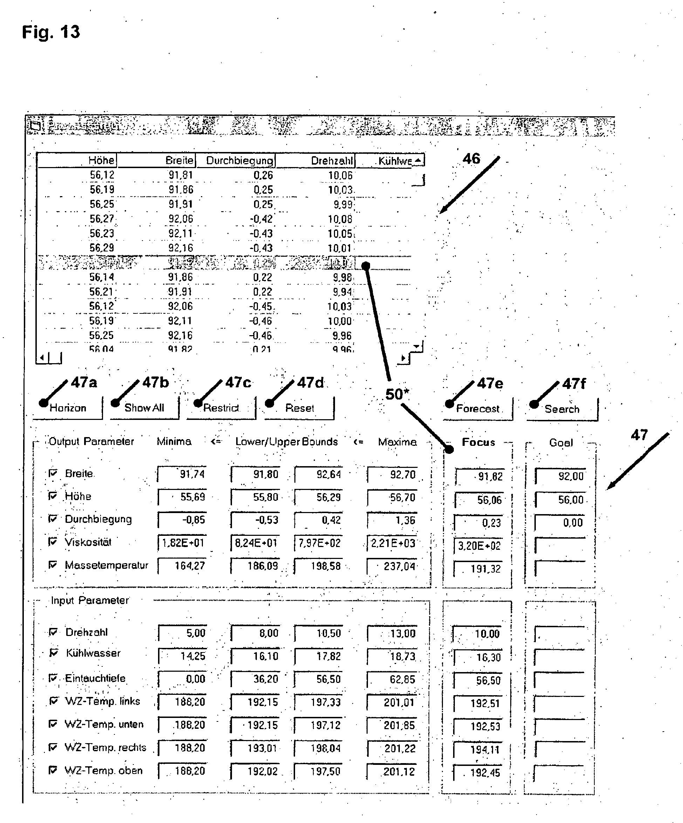

- **Figur 13**: ist eine alternative Detailansicht zur Figur 12, im Wege von angezeigten Zahlenwerten anstelle graphischer Horizontabbildung mit einbeschriebenen Polygonen (Linienkörpern).

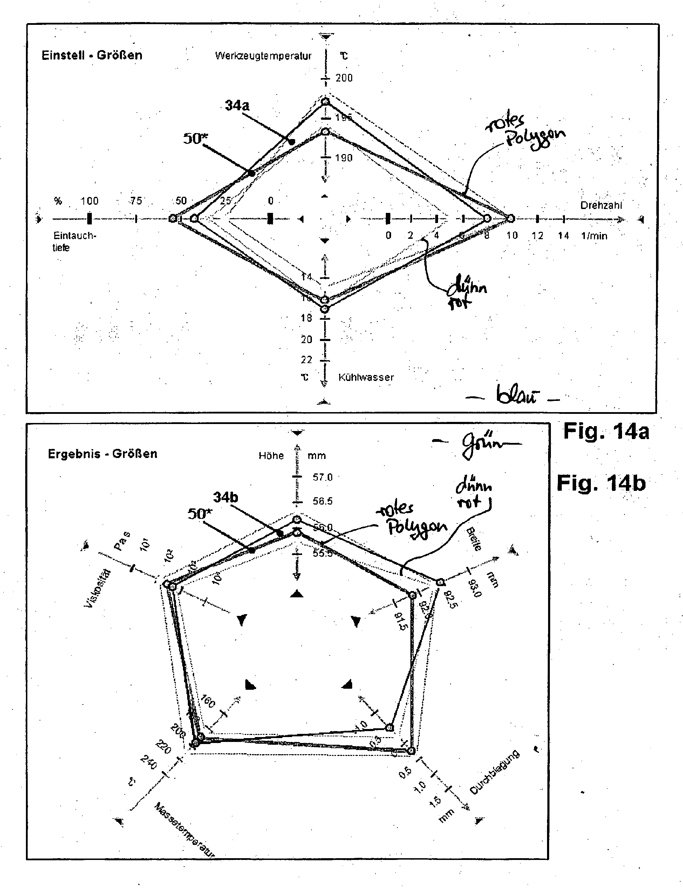

- **Figur 14a, Figur 14b**: sind alternative Horizontansichten zu der Darstellung der Figuren 11a,11b, nur mit Polygonen und dennoch in der Wirkung kontrastierend gegenüber dem inneren und dem äußeren Umfeld hervorgehoben. Zur Veranschaulichung sind hier nochmals die Polygone aus den Figuren 4 und 6 gestrichelt (feiner) dargestellt, die aufgrund gesetzter Restriktionen keine Berücksichtigung mehr finden.

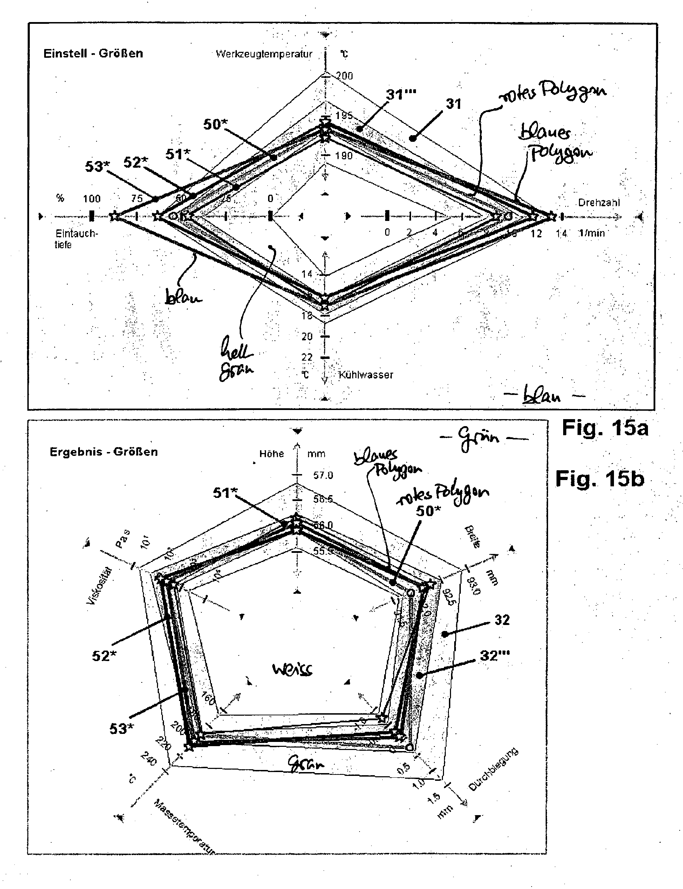

- **Figur 15a, Figur 15b**: veranschaulichen Detailansichten zu berechneten Forecast Polygonen 51*, 52*, 53*, als Alternative zur Bestimmung eines neuen Arbeitszustandes mit interaktiver Prozessbeeinflussung der Anlage nach Figur 1.

Die in **Figur 1** veranschaulichte Extrusionsanlage besteht aus einem Steuerbereich 100 mit Regelungs- und Steuerungseinrichtung, Prozessrechner und Speicher. Ein weiterer Bereich ist der Produktionsbereich 101, in dem die Anlage aus einen Kabelkanal 20* durchgehend erzeugenden Einheiten besteht, die weiter unten erläutert werden. Zwischen dem produzierenden Bereich 101 und dem steuernden Bereich 100 sind eine Vielzahl von Regelungs- und Steuerungsaufgaben sowie Messgrößen vorgesehen. Diese Darstellung ist schematischer Natur und soll die Komplexität der Steuerungsaufgabe verdeutlichen.

Es ist für die Erzeugung des Kabelkanals 20 nach Figur 1a eine Aufgabestelle y für ein Granulat, ein Extruderantrieb a und ein Extruder b vorgesehen. Am Kopf des Extruders ist ein Werkzeug c vorgesehen, das dem Kabelkanal 20 sein Profil und seine Form gibt. Ein Abschnitt eines solchen Kabelkanals 20*, noch als Strang, ist zwischen Kopf und dem ersten Einlauf der Kühlstrecke e vorgesehen. Die Kühlstrecke e ist unterbrochen von einem Messgerät d, welches beispielsweise die Dicke der Wandstärke des extrudierten, im Querschnitt zumindest teilkastenförmigen Extrusionsbauteils 20* (hier als Kabelkanal dargestellt) misst. Als Wandstärken kommen solche Wände in Betracht, die in Figur 1a jeweils spezifisch benannt sind, der Boden 23, die linke und rechte Seitenwand 21, 22 oder Abschnitte der Wandstücke 24a, 24b, welche parallel zum Boden 23 verlaufen und rechtwinklig von der linken bzw. rechten Wand 21, 22 abragen. Etwa mittig ist ein durchgehender Spalt vorgesehen, der von einem Deckel verschlossen werden kann. Im Extrusionsprozess der Figur 1 liegen zwischen dem Messgerät d und einem Abzug f weitere Kühleinheiten, welche den extrudierten Kabelkanal herunterkühlen. Der Endlos-Kabelkanal ist in das Anlagendiagramm der Extrusionsanlage als schwarze Linie eingezeichnet.

Nach der Kühlstrecke e sind der Abzug f und eine Säge g als Beispiel einer Abtrenneinrichtung vorgesehen, welche den durchgehend im Strang produzierten Kabelkanal in einzelne Stücke ablängt. Am Ende entstehen fertig bemessene, einzelne Kabelkanal-Stücke, die in einer Kipprinne h dem weiteren Nachbearbeitungs- und/oder Verpackungsprozess zugeführt werden. Dieser weitere Prozess ist mit x symbolisiert. Hier hat der Kabelkanal 20 seine vorgegebene Länge, während der extrudierte Kabelkanal 20* am Stück endlos produziert wird.

In Figur 1 sind einige Einstellgrößen, einige Ergebnisgrößen und einige Störgrößen aufgelistet. Sie sind bezogen auf diejenigen Bereiche der Maschine, in der sie auftreten. Die Schnecken-Drehzahl ist im Bereich des Extruders a, b angesiedelt. Die Werkzeugtemperatur wird im Bereich des Werkzeugs c gemessen. Hier können mehrere Werkzeugtemperaturen erfasst werden, an unterschiedlichen Stellen des Werkzeugs. Die Kühlwasser-Temperatur findet sich in einem der mehreren Abschnitte der Kühlstrecke e. Auch hier können mehrere Stellen zur Messung der Kühlwassertemperatur vorgesehen sein. Eine Eintauchtiefe ist im Bereich derselben Kühlung messbar oder einstellbar. Sie betrifft das Eintauchen des extrudierten Bauteils in ein Kühlmedium.

Separate Signalgeber, Messfühler oder -geber sind nicht dargestellt, lediglich repräsentiert durch die Angabe der physikalischen Ergebnisgrößen, welche sie messen oder erfassen.

Als Ergebnisgrößen sind Schmelzeviskosität, Massetemperatur, Maßhaltigkeit und Oberflächen-Qualität angegeben. Die Viskosität wird im Bereich b des Extruders gemessen. Die Massetemperatur ist im selben Bereich des Extruders gemessen. Die Maßhaltigkeit des Extrusionsbauteils wird im Messgerät d und/oder in den Abschnitten erfasst, in denen das Extrusionsbauteil entsteht, so dass beispielsweise Dickenmessungen am extrudierten Endlos-Bauteil 20*, am abgelängten Einzelbauteil 20 oder an einer anderen Stelle des Herstellungsprozesses vorliegen können. Die Oberflächenqualität wird optisch durch einen nicht dargestellten Sensor erfasst und kann ebenfalls an einer gewünschten Stelle im Zuge des gesamten Prozesses nach dem Verlassen des Werkzeuges vorgesehen sein.

Störgrößen sind symbolisch als Lufttemperatur, Luftfeuchte, Luftdruck und Zugluft angegeben, die an jeder Stelle des Prozesses in der Prozessumgebung anstehen können.

Weitere Systemcharakteristiken ergeben sich beispielsweise durch einen Werkzeugzustand (Geometrie, Oberfläche) oder eine Materialqualität (Reinheit, Homogenität) als "versteckte" Systemcharakteristiken, die nicht direkt messbar sind, sich jedoch bei einer Veränderung auf das Ergebnis des Prozesses, meist auf das hergestellte Bauteil auswirken. Sie fallen nicht unter Störgrößen, sie bewirken eine Veränderung der Ergebnisgröße, werden aber selbst nicht als einstellbar erachtet. Sie können lediglich durch Ändern der Einstellgrößen kompensiert werden.

Einen Einblick in den Status der Extrusionsanlage gibt der Überblick in das Erfahrungswissen nach **Figur 2****.** Es werden Polygone für die Bildung eines dort sichtbaren Horizonts 39 verwendet, welche im Steuer- und Regelungsteil 100 in einem Speicher (Prozessdatenspeicher) vorhanden sind. Der gesamte Überblick über dieses Erfahrungswissen zeigt die Status' an, in welchen sich die Extrusionsanlage befinden kann. Von diesen Zuständen repräsentiert eine Funktion 50 als Polygon den Istzustand der Extrusionsanlage. Drei weitere Polygone 51, 52 und 53 sind als Vergleich (andere Status' oder Zustände) dargestellt. Diese vier Polygone sind aber nur ein Bruchteil derjenigen Anzahl von Polygonen, welche im Prozessdatenspeicher verfügbar sind und welche den Horizont 39 aufspannen. In der Figur 2 sind davon nur vier Polygone gezeigt. Diese vier Polygone halten sich außerhalb eines inneren Rands 39b und innerhalb eines äußeren Rands 39a. Die beiden Ränder 39a, 39b kommen in Verbindung mit einem Gerippe oder Gerüst aus Skalenarmen zustande, gespeist aus dem Datenbestand der Steueranlage 100.

Unterschieden werden können die dargestellten Skalenarme nach Einstellgrößen (linker unterer Bereich), nach Ergebnisgrößen (rechter unterer Bereich) und nach Störgrößen (oberer Bereich). Zu den Einstellgrößen gehören die Skalenarme 1, 2, 3, 4 und 14 bis 16. Zu den Ergebnisgrößen gehören die Skalenarme 5 bis 9. Zu den Störgrößen gehören die Skalenarme 10 bis 13.

Alle Skalenarme sind so angeordnet, dass sie nicht übereinander fallen, sondern jeder Skalenarm eigenständig eine physikalische Größe definiert, repräsentiert und übersichtlich darstellt. Die dargestellten Prozessgrößen der Arme 1 bis 16 sind nicht identisch und auch nicht linear abhängig im Sinne einer einfachen Proportionalität.

Die Skalenarme können zu größeren oder kleineren Werten nach innen oder außen gerichtet sein, je nach physikalischer Größe, welche sie abbilden.

Die Skalenarme sind voneinander beabstandet, kein Skalenarm fällt auf einen anderen Skalenarm. Jeder Skalenarm ist eigenständig sichtbar. Einige der Skalenarme divergieren, so die Skalenarme 2, 3, 5, 6, 10 und 13. Einige andere Skalenarme verlaufen parallel, wiederum andere Skalenarme 11, 12 verlaufen senkrecht zu den parallelen Skalenarmen.

Zur Aufspannung des Horizonts 39, dessen Abgrenzung von dem äußeren Umfeld 36 und von dem inneren Umfeld 35 werden alle in der Datenbank (dem Prozessdatenspeicher oder einem separaten Speicher 38a) verfügbaren Kennwerte verwendet. Eine Gruppe von Kennwerten, die zusammengehören, bildet einen Status der Extrusionsanlage von Figur 1 ab. Dazu ist auf jedem der Skalenarme ein zugehöriger physikalischer Größenwert bekannt, welche physikalischen Größenwerte dieses Status' zusammenhängend ein Polygon beschreiben, wenn jeder Punkt (Kennwert) auf jeder Achse verbunden wird. Als Beispiel dienen die vier eingezeichneten Polygone 50, 51, 52 und 53.

Als Focus-Polygon 50 ist eines der Polygone (rot, bzw. mit stärkerer Linienbreite) herausgegriffen, das beispielsweise bei einer Drehzahl von 5 1/min einen Kennwert auf dem Drehzahl-Skalenarm besitzt und bei den Ergebnisgrößen einen Höhenwert von etwa 55,8 mm bei dem Extrusionsbauteil besitzt.

Das Focus-Polygon 50 ist bei einem Luftdruck von zwischen 1000mbar und 1010mbar aufgezeichnet worden und kann entweder aus einem früheren Prozesszustand der Anlage gemessen und gespeichert worden sein oder stellt den aktuellen Systemzustand (den Status) der Extrusionsanlage nach Figur 1 dar.

Die in Figur 2 veranschaulichten Ergebnisgrößen betreffen zum Teil das Extrusionsbauteil nach Figur 1a, beispielsweise die Skalenarme 7, 8 und 9 für Durchbiegung, Höhe bzw. Breite. Die Kategorie der Ergebnisgrößen betrifft auch die Viskosität und die Massetemperatur, wie unter "Ergebnisgrößen" in Figur 1 dem Produktionsprozess, und nicht dem Bauteil zugeordnet.

In der Kategorie der Einstellgrößen finden sich vier Temperaturwerte für das Werkzeug im Werkzeugbereich c der Figur 1. Es finden sich die Eintauchtiefe und das Kühlwasser auf den Skalenarmen 2, 3, welche für den Bereich der Kühlstrecke e im Wege einer Vorgabe eingestellt worden sind oder dort gemessen werden.

Zu den Störgrößen braucht nur auf Figur 1 verwiesen zu werden, dort sind einige angegeben und die ihnen entsprechenden Skalenarme heißen 10 bis 13 in Figur 2.

Die Kategorisierung ist damit abgeschlossen. Das Bilden der oberen und der unteren Grenze 39a, 39b geschieht durch Verbinden aller minimalen Werte jedes Skalenarms und durch Verbinden aller maximalen Werte jedes Skalenarms, hier den sechzehn gezeigten Skalenarmen, von denen sieben der Kategorie der Einstellgrößen zugeordnet sind, fünf der Kategorie der Ergebnisgrößen und vier der Kategorie der Störgrößen. Es ist anzumerken, dass das äußerste Polygon 39a und das innerste Polygon 39b keine realen zusammengehörenden Kennwerte beinhaltet und jeweils selbst keinen Maschinenzustand beschreibt, sondern nur die jeweils unterste Grenze aller Werte (physikalischer Größen) abbildet, die auf Skalenarmen repräsentiert sind, bzw. die jeweils oberste (physikalische) Grenze aller Werte, die auf den Skalenarmen repräsentiert sind.

Es ist zu Figur 2 anzumerken, dass diese Darstellung ein Beispiel der Repräsentierung von einer Vielzahl von Skalenarmen der Kategorie Ergebnisgrößen und einer Vielzahl von Skalenarmen der Kategorie Einstellgrößen sowie einer Vielzahl von Skalenarmen der Kategorie Störgrößen ist. Die genaue Bezifferung der Maßangabe hält sich im Rahmen physikalischer Einheiten, die quantitativ repräsentiert sind. Nicht dargestellt, aber ohne weiteres zur Figur 2 verständlich, sind qualitative Angaben, die zum Beispiel im pauschalierten Zusammenfassen von physikalischen Prozessgrößen oder physikalischen Bauteilgrößen liegen. Für die Luftfeuchte als Störgröße kann beispielsweise pauschaliert angegeben werden: 'Trocken', 'Standard' oder 'Feucht', ohne spezifische Angabe der Luftfeuchte zwischen 0% und 100%, wie von Skalenarm 11 repräsentiert. Die Werte 'Trocken', 'Standard' und 'Feucht' bilden dann drei eigenständige Punkte auf dem Skalenarm 11. In gleicher Weise kann auch die Eintauchtiefe auf Skalenarm 2 statt in quantitativer Angabe in eine qualitative pauschalisierte Angabe gefasst werden, so als 'Hoch' (große Tiefe), 'Flach' und 'Normal'.

Bei zumindest einem oder mehreren solcher Skalenarme, die nicht quantitative, sondern qualitative Angaben enthalten, ist entsprechend auch die obere und untere Grenze nicht ein minimaler und ein maximaler Wert, wie bei quantitativen Angaben, sondern es gibt dann einen inneren und einen äußeren Wert auf einem jeweiligen Skalenarm, der zur Bildung der durchgehenden inneren Grenze 39b und der durchgehenden äußeren Grenze 39a beiträgt.

Diese Erläuterung ist auch ohne eine korrespondierende eigene Darstellung dem hier zuständigen Normalfachmann einsichtig.

**Figur 2a** verdeutlicht vier Arten von Kennwerten, die zu jeweiligen Status-Polygonen zusammengefasst in der Figur 2 abgebildet sein können. Es gibt A-Polygone, E-Polygone, P-Polygone und F-Polygone.

Diese Polygone haben Kennwerte, die zusammengehören und alle auf dieselbe Art und Weise erfasst worden sind und gespeichert wurden. Die A-Polygone sind a-priori Wissen von ähnlichen Prozessen, Produkten oder Maschinen. Sie sind möglicherweise unvollständig und nicht alle Skalenarme müssen einen entsprechenden Punkt dieses a-priori Polygons besitzen. Kommt beispielsweise eine zusätzliche Messstelle für eine Temperatur in einer Anlage nach Figur 1 hinzu, so können bekannte und schon gespeicherte Status' der Prozessanlage diesen Skalenarm nicht bedienen und er bleibt zunächst offen. Ein zugehöriger Kennwert existiert im Speicher 38a der Datenbank nicht.

Experimentelle Ergebnisse werden mit Methoden der Versuchsplanung, mittels Navigation durch den Benutzer oder mittels automatischer Generierung erzeugt, und dann mit einem Experiment evaluiert und aufgezeichnet. Die entsprechenden Werte ergeben E-Polygone.

Die aus Produktionsprozessen stammenden P-Polygone werden interaktiv manuell erfasst, oder können automatisch über eine Betriebsdaten-Erfassung gespeichert werden (BDE).

Eine weitere Gruppe von Polygonen sind die F- oder Forecast-Polygone, die über Response-Surface-Methoden interpolierend, extrapolierend oder ähnlich berechnet werden. F-Polygone werden eventuell automatisch aktualisiert, je nach fortschreitendem Informationsgewinn.

In der Figur 2 werden diese Arten von Polygonen nicht unterschieden. Jedes Polygon und damit jede zusammengehörige Gruppe von Kennwerten gibt einen Status der Anlage nach Figur 1 bekannt und kann im Horizont 39 Platz finden.

Die Hilfsmittel zur Veränderung des Focus (des zugehörigen Polygons 50 in Figur 2) sind Goal 48 und Delimiter 49 nach Figur 2a.

Es kann hier zur Übersicht angegeben werden, dass das Focus-Polygon 50 zu ändern ist in ein Wunschpolygon, welches in **Figur 12** als neues Focus-Polygon 50* erscheint. Diese Figur 12 entspricht hinsichtlich der Skalenarme und ihrer Anordnung derjenigen von Figur 2, nur sind hier Maschinenstatus' herausgegriffen, die innerhalb eines hervorgehobenen Korridors liegen, der sich innerhalb des Horizonts 39 befindet und nicht darüber hinausreicht. Einzustellen ist also die aktuell laufende und produzierende Anlage nach Figur 2 mit dem dortigen Focus-Polygon 50 in eine neue Anlagen- oder Produktionseinstellung 50* nach Figur 12. Der entsprechende Übergang soll schnell, zuverlässig und zielorientiert verlaufen. Hierzu werden Vorgaben gemacht, die in der Folge der nächsten Figuren erläutert werden und die zu Wunschpunkten oder Wunschergebnissen führen, welche das neue Polygon 50* vollständig oder fast vollständig, zumindest aber in erster Näherung erfüllt.

Die Steuerung des Produktionsprozesses, repräsentiert durch das Ist-Polygon 50 nach Figur 2, entsprechend dem Ist-Zustand der Extrusionsanlage nach Figur 1, kann in vielerlei Hinsicht erfolgen. Es können neue Polygone 50* eingestellt werden, voreingestellt werden, die Anlage nach Figur 1 kann überwacht werden. Der bisherige Produktionsprozess nach Polygon 50 kann abgeändert werden, was zum neuen Prozess nach 50* gemäß Figur 12 führt. Er kann bei dieser Abänderung optimiert werden. Es können Probeherstellungen erfolgen und es kann eine Analyse stattfinden, mit der ein Produktionsprozess, repräsentiert durch Polygon 50 nach Figur 2, auf Brauchbarkeit hin analysiert wird.

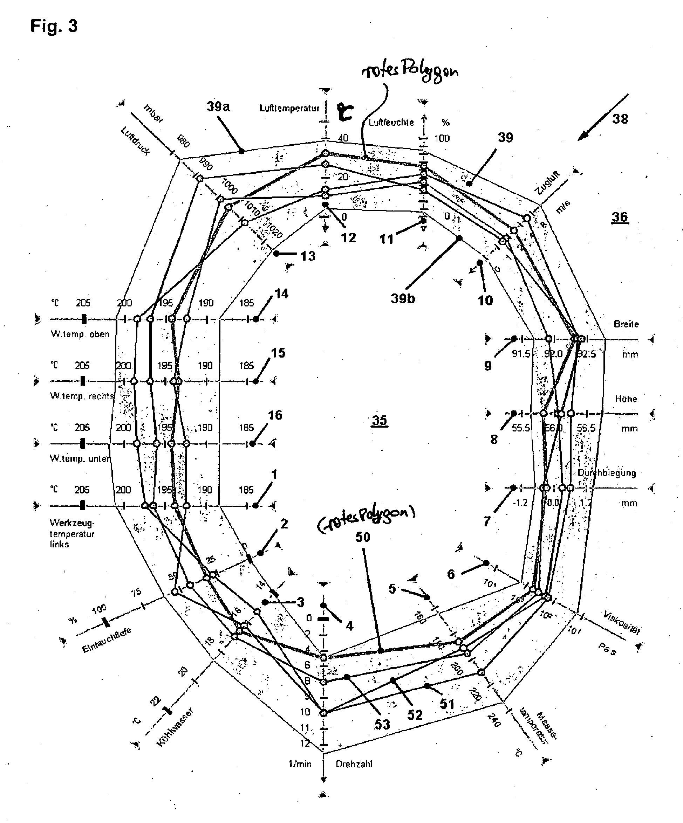

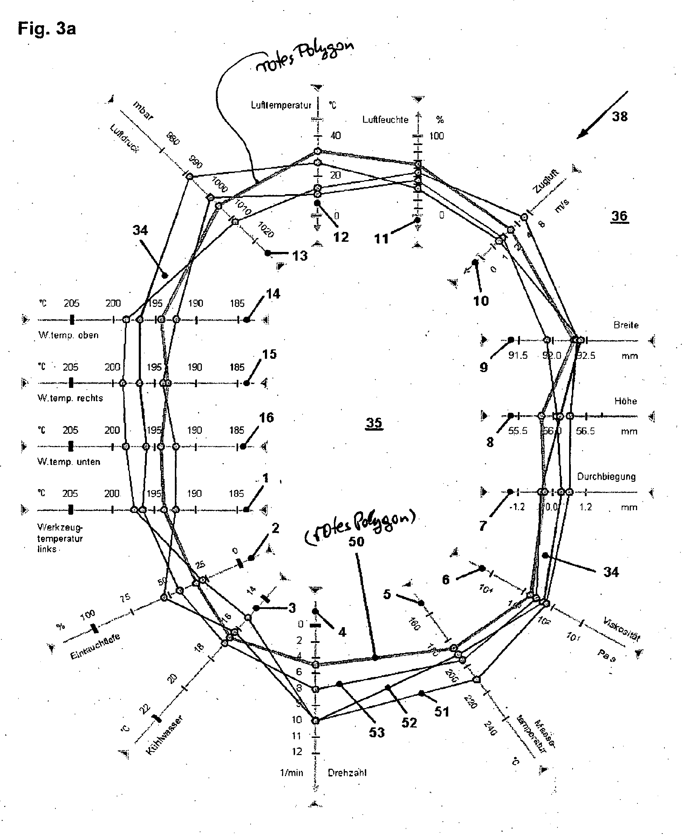

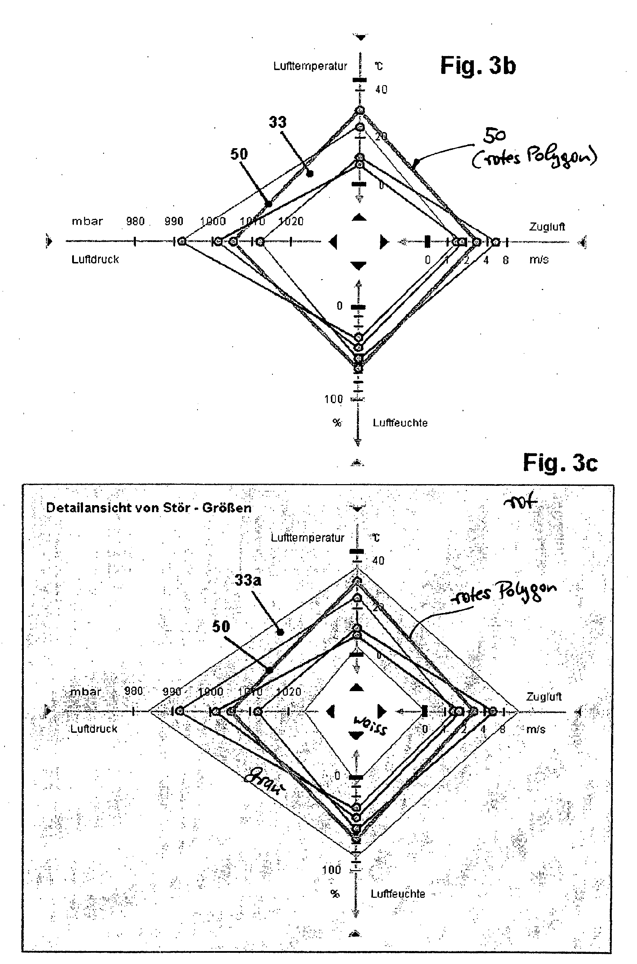

Die Display-Darstellung nach **Figur 3** entspricht sinngemäß derjenigen von Figur 2, nur ohne Kennzeichnung von Kategorien. Sichtbar bleibt der kontrastierend wirkende Horizont 39, seine Außengrenze 39a, seine Innengrenze 39b und das Focus-Polygon 50, das demjenigen von Figur 2 entspricht. Auch die Skalenarme 1 bis 16 sind identisch und identisch angeordnet.

Dieser Überblick über das Erfahrungswissen und die Kennzeichnung des aktuellen Ist-Zustands der Anlage werden dargestellt von einer Darstellungseinrichtung 38, mit einem Display als Bildschirm, wie ein Monitor oder ein Maschinenschirm einer ist.

Statt eines Bildschirms sind auch andere Möglichkeiten gegeben, wie ein Ausdruck der Horizonte auf einem Drucker oder Plotter, eine Projektion auf eine Wandfläche oder als Bestandteil einer Steuervorrichtung, welche die Einstellung für die Extrusionsanlage vornimmt. Ein "Touchpanel" ist hierfür besonders geeignet. Auf diese Weise ist der Benutzer unmittelbar nahe dem Prozess, der als Arbeits- und Herstellungsprozess anzusehen ist, andererseits weit ab bei einer Off-line-Präsentation mit Erläuterungen, beispielsweise über Overhead oder Beamer oder anderweitige Großdarstellungen. Systemzustände, fehlerhafte Betriebszustände oder ggf. einmal früher geschehene Unglücksfälle können auf diese Weise dargestellt, erläutert und in ihren Auswirkungen einem Publikum verdeutlicht werden, betont im Umfeld des gesamten Prozesses und nicht nur anhand einzelner spezifischer, physikalischer Größen von einzelnen spezifischen Einheiten oder Geräten des Gesamtprozesses.

Die Darstellung der Figuren 3 und 2 ist hinsichtlich der Ränder des Horizonts 39 mit einer inneren und äußeren Randlinie 39a, 39b versehen, die aber auch wegfallen kann. Der Horizont wird bei einer Vielzahl von einbeschriebenen Polygonen, die alle aus den beschriebenen vier Gruppen von Polygonen der Figur 2a bestehen, welche im Prozessrechner-Speicher 100 oder 38a gespeichert sind, auch ohne eine geradlinig verlaufende Randlinie kontrastierend hervorgehoben erscheinen (wirken). Eine Helligkeits-Unterscheidung oder eine farbliche Unterscheidung ist dann für den Horizont nicht erforderlich. Die sichtbaren Randlinien zwischen jeweils zwei benachbarten Skalenarmen wären dabei nicht geradlinig. Zwischen jeweils zwei benachbarten Skalenarmen, entstehen dabei durchaus Knicke, verursacht durch ein sich Schneiden von unterschiedlichen Polygonabschnitten von unterschiedlichen Maschinenstatus' (Maschinenzuständen).

Im Beispiel finden sich solche Knicke am Rand zwischen den Achsen 13, 12 oder 10 und 11, durch die sich jeweils dort mit dem Focus-Polygon 50 schneidende Linie eines anderen der übrigen Polygone 51 bis 53. In anderen Zwischenbereichen zwischen zwei jeweils benachbarten Skalenarmen ist dieses ebenfalls ersichtlich. Vom Zweck her wird sowohl mit dem inneren und äußeren geradlinigen Rand, wie auch bei Fehlen dieses festgelegten Randes eine kontrastierend hervorgehobene Horizontdarstellung 39 erreicht.

Der in Figur 2 und 3 abgebildete Horizont 39 ist der primäre Horizont. Aus ihm können mehrere sekundäre Horizonte abgeleitet werden, was anhand der **Figuren 4 bis 6** erläutert wird.

Die Vollständigkeit des überblickten Erfahrungswissens nach Figur 3 wird zugunsten einer einfacheren Übersicht und einer Verlagerung des Schwerpunktes bei einer Optimierung, Einstellung oder sonstiger Steuerung auf eine Kategorie beschränkt. Dazu ist in **Figur 4** ein G-Horizont 32 von Ergebnisgrößen gebildet, nur unter Berücksichtigung der Skalenarme 5 bis 9. Dieser Horizont 32 ist ebenfalls kontrastierend hervorgehoben, gegenüber einem inneren Umfeld und einem äußeren Umfeld.

Der Horizont 32 wird ebenso begrenzt, wie zuvor für den primären Horizont 39 beschrieben, nur hier durch eine äußere Randlinie 32a und eine innere Randlinie 32b.

Die Reduktion des Übersichtsbildes der Figur 2 oder 3 auf nur einen Horizont, wie etwa nach **Figuren 3b, 3c****,** **4** **oder** **6****,** erlaubt ein direktes Arbeiten in den verfügbaren Polygonen, ohne die Veränderung in den übrigen Kategorien mit berücksichtigen zu müssen.

Beispielweise ist in Figur 4 das Focus-Polygon 50 hervorgehoben, neben den drei übrigen Polygonen 51, 52 und 53, hier aber nur mit Kennwerten aus der Kategorie der Ergebnisgrößen und den zugehörigen Skalenarmen. Die genannten physikalischen Größen Viskosität und Massetemperatur für den Prozess und Höhe, Breite sowie Durchbiegung für das Produkt "Extrusionsbauteil" sind allgemein auch mit anderen physikalischen Ergebnisgrößen ersetzbar. Die zugehörigen Skalenarme werden deshalb mit G5 bis G9 beziffert, zur Symbolisierung beliebiger physikalischer Größen im Rahmen des Produkts und des Prozesses.

Eine Zielorientierung hin zu beispielsweise einer höheren Drehzahl am Skalenarm 4 oder einer Erhöhung der Wassertemperatur im Skalenarm 3 kann anhand des reduzierten Horizonts leichter überschaut werden. Hierzu wird auf die **Figuren 5 und 6** verwiesen, welche den Einstellgrößen-Horizont als weiteren Sekundärhorizont 31 erläutern.

In Figur 6 kann hierzu aus den dargestellten Polygonen um das Focus-Polygon 50 herum ein Polygon herausgesucht werden, das bei dem Kühlwasser keine zu niedrige Temperatur angibt und bei der Drehzahl einen höheren Wert besitzt. Dies sind die Skalenarme 3, 4 mit den physikalischen Einheiten E3 und E4. Eine Fokussierung auf das zu lösende Problem des neuen Betriebszustands 50* wird hier deutlich.

Eine weitere Verdichtung von Informationen kann aus mehreren Skalenarmen des Übersichtshorizonts von Figur 2 erfolgen. Hier kann gemäß Figur 5 in einem Beispiel ein gemittelter Temperaturwert gebildet werden, der einen in Figur 2 nicht dargestellten Skalenarm 1* mit Kennwerten versieht. Die vier Temperaturwerte der Skalenarme 1 und 14 bis 16 von Figur 2 werden in Figur 5 graphisch dargestellt und die zugehörigen physikalischen Größen sind E17, E14, E15 und E16. Diese vier Temperaturwerte werden verdichtet durch beispielsweise eine Mittelung von mehreren Werkzeugtemperaturen, welche dann als Mittelwert auf dem Skalenarm 1* von Figur 6 aufgetragen werden. Diese Temperatur und diesen Skalenarm gibt es nicht in Figur 2, aber er erlaubt das Arbeiten mit verdichteter Information und reduziertem Horizont, im Rahmen des Sekundärhorizonts 31.

Der Sekundärhorizont 31 mit äußerer Begrenzung 31a und innerer Begrenzung 31b kann auch ohne diese geraden Randlinien arbeiten, nur durch die vorhandene Fülle der Polygone 50 bis 53 (auch Linienkörper genannt). Die entsprechenden Ausführungen sollen aus den Erläuterungen zu Figur 3 und 2 übernommen und hierher übertragen werden.

Es ist anzumerken, dass auch die Störgrößen einen eigenen Horizont haben können, der entsprechend obiger Sekundärhorizonte ausgebildet ist, wie ihn die Ergebnisgrößen und die Einstellgrößen als Sekundärhorizonte 31, 32 bilden. Die **Figuren 3b und 3c** zeigen entsprechende Beispiele, entnommen aus Figur 2 mit Sekundärhorizont 33 und vier Skalenarmen.

Es ist bei den Störgrößen zwar keine unmittelbare Einstellung möglich, es kann aber aus bestehenden Erfahrungswerten gelernt werden und auf eine vorhandene Umgebungssituation reagiert werden. Ist beispielsweise ein sehr heißer Tag, kann man im Rahmen eines Störgrößen-Horizonts entsprechende Polygone auffinden, die dem heutigen Tag in der herrschenden hohen Außentemperatur entsprechen. Ausgehend von dieser Vorgabe kann dann in anderen Horizonten nach Lösungen gesucht werden, wie der Produktionsprozess unter diesen äußeren Einflüssen verbessert oder zumindest so gestaltet werden kann, wie früher schon einmal ein solcher Produktionsprozess bei einem heißen Tag passend eingestellt war.

**Figur 7** ist eine Übersicht über ein Steuerverfahren, welches funktionell aus einzelnen Schritten besteht, die aber Teil eines Gesamtverfahrens darstellen. Wenn deshalb von einem "Schritt 88" gesprochen wird, umschreibt dieser lediglich ein Stück des Gesamtablaufs.

Der Überblick über das vorhandene Erfahrungswissen aus dem Speicher 38a der Steuerung 100 erfolgt in Schritt 88. Dieser entspricht den Figuren 2 oder 3.

Die Einschränkung der Komplexität, also die Verdichtung von Information und die Beschränkung auf einzelne Bereiche eines Steuerprozesses, finden in Schritt 89 statt. Hierfür stehen die zuvor beschrieben Sekundärhorizonte der Figuren 3b, 3c, 4 oder 6. Eine Einschränkung ist auch die Reduktion von mehreren physikalischen Größen, beispielsweise den Temperaturen nach Figur 5, zu einem Mittelwert, der dann in einem neu gebildeten Skalenarm eines Sekundärhorizonts Repräsentanz findet.

Die Übersicht kann in Schritt 90 verbessert werden, was anhand der Figuren 6a, 4a verdeutlicht werden soll. In diesen Figuren werden die Sekundärhorizonte allein dargestellt, welche anhand der Figuren 4 und 6 mit Polygonen verdeutlicht wurden. Der Sekundärhorizont 31 für die Einstellgrößen und der Sekundärhorizont 32 für die Ergebnisgrößen sind dabei kontrastierend gegenüber dem inneren und äußeren Umfeld hervorgehoben. Hier werden der äußere Rand und der innere Rand verwendet. Die Darstellungen nach Figuren 6a und 4a sind vorteilhaft verwendet bei der Arbeit mit den Delimitern 49, als Hilfsmittel zur Prozessbeeinflussung. Diese sollen anhand der später folgenden Figuren 8 ff erläutert werden.

Die Steuerung des Prozesses der Anlage findet im Abschnitt 99 von Figur 7 statt. Hier wird mit verschiedenen Arbeitsweisen "Cluster bestimmen" im Schritt 92, "Goals vorgeben" im Schritt 93 oder "Forecast berechnen" im Schritt 97 sowie einer Auswahl 91, welches dieser Steuerverfahren aktuell eingesetzt wird, gearbeitet. Ist das anhand einer mehrfachen Iteration gefundene Ergebnispolygon 50* ausreichend, kann die Iterationsschleife verlassen werden, was der Schritt 94 symbolisiert. Der dann gefundene neue Systemzustand 50* der Extrusionsanlage ersetzt den Ist-Zustand 50 von Figur 2.

In einer weiteren Darstellung können Details angezeigt werden, was bei Schritt 95 geschieht, und der neu eingestellte Prozess beginnt in Schritt 96 mit der Einstellung des neuen Focus-Polygons 50*. Das Steuerverfahren ist für den Wechsel des Ist-Zustands 50 auf den Soll-Zustand und neuen Ist-Zustand 50* nach Figur 12 in dieser Ausprägung beendet.

Weitere Steuerungen können dann auf gleiche Weise folgen, wieder mit einem neuen Ziel und entsprechend dem iterativen Arbeitsprozess 99 im Kern der Figur 7.

Zu den Möglichkeiten der Iteration sind die in Figur 2a beschriebenen Hilfsmittel alternativ oder in jeder Kombination kumulativ einzusetzen, so das Focus-Polygon 50, das Goal 48, der Delimiter 49 sowie die Bestimmung von Forecast-Polygonen in 97, auf die erst weiter unten näher eingegangen wird. Die Erläuterung soll hier zunächst mit dem Delimiter fortgesetzt werden.

In **Figur 8a, 8b** sind zwei Sekundärhorizonte gezeigt, derjenige der Kategorie Einstellgrößen und derjenige der Kategorie Ergebnisgrößen. Es wird dabei angenommen, dass die Abfrage 91 von Figur 7 so beantwortet wurde, dass ein Cluster bestimmt werden soll, was im Schritt 92 erfolgt. Figur 8a ist damit innerhalb des Schritts 92 angesiedelt.

Ein Cluster definiert eine Gruppe von Polygonen, die eine bestimmte Bedingung erfüllen.

Die Bedingung wird manuell vorgegeben, oder sie kann von einer übergeordneten Vorgabe numerisch vorgegeben worden sein. Im genannten Beispiel soll die Drehzahl erhöht werden, und die Wassertemperatur darf ebenfalls erhöht werden bzw. sollte nicht zu weit fallen. Im Sekundärhorizont 31 von Figur 8a wird ein Delimiter 49 platziert, und zwar auf dem Skalenarm 4, der die Drehzahl repräsentiert. Der eingesetzte Delimiter ist hier eine untere Grenze. Er lässt alle Polygone weiterhin in der engeren Auswahl, welche Kennwerte auf dem Skalenarm 4 besitzen, die oberhalb des gewählten Mindestwerts von hier ca. 7 1/min liegen. Die dabei verbleibenden Polygone sind nicht im Einzelnen in Figur 8a dargestellt, sondern definieren einen Korridor 31', der innerhalb der äußeren Ränder liegt.

Ein Umschalten im Schritt 92 auf einen anderen Sekundärhorizont, hier den der Kategorie der Ergebnisgrößen nach Figur 8b, zeigt ebenfalls einen Korridor 32', dessen Kennwerte und Polygone mit denjenigen korrespondieren, die durch den Delimiter 49 aus dem ersten Sekundärhorizont nach Figur 8a ausgewählt wurden.

Die Korrespondenz zwischen diesen Werten liegt in der Zusammengehörigkeit aller Kennwerte eines Systemzustands für ein Gesamtpolygon, welches in der Gesamtübersicht nach Figur 3 zusammenhängend dargestellt ist. Die Figuren 8a und 8b hängen mithin über die Zusammengehörigkeit von jeweils einer Gruppe von Kennwerten zusammen, die gemeinsam einen (jeweils singulären) Maschinenstatus beschreiben. Von diesen Gruppen sind mehrere durch den Delimiter 49 ausgewählt, aber nicht alle, welche den ursprünglichen ersten Sekundärhorizont 31 aufspannten.

Ein Wechsel zwischen den Sekundärhorizonten bringt eine Übersicht über die Möglichkeiten, die gewünschte Auswahl oder Zielfunktion 50* zu erreichen. Wenn der Prozess bzw. das Produkt in einem oder mehreren der Ergebnisgrößen in unerwünschte Zustände (Bereiche) gelangt, kann der platzierte Delimiter 49 nicht mehr wie vorgesehen beibehalten werden. Der zweite Sekundärhorizont bietet damit eine Überprüfungsmöglichkeit für die Realisierungswahrscheinlichkeit des eingeschlagenen Weges.

In gleicher Weise kann durch weitere Delimiter der Einstellgrößen-Horizont auf einen noch kleineren Korridor 31" eingeschränkt werden, was **Figur 9a** verdeutlicht. Der zweite Delimiter 49a wird gemäß der eingeschlagenen Zielrichtung bei einer Mindesttemperatur des Kühlwassers platziert. Hier sind Werte von unter 16°C nicht erwünscht, so dass nur noch eine weiterhin eingeschränkte Anzahl von Polygonen in Frage kommt, welche beide Delimiter 49, 49a erfüllen (größer/gleich den unteren Grenzwerten), und gleichzeitig innerhalb des ersten Sekundärhorizonts 31 liegen.

Die entsprechende Darstellung im Wechsel auf den anderen Sekundärhorizont nach Figur 9b veranschaulicht den dort nur noch verblieben kleineren Korridor 32". Dieser Korridor 32" korrespondiert mit dem Korridor 31" so, wie der Korridor 32' mit dem Korridor 31' der vorhergehenden beiden Figuren.

Auch in diesem Stadium der Steuerung ist im Verfahrensschritt 92 eine Überprüfung der Realisierungswahrscheinlichkeit anhand des zweiten Sekundärhorizonts möglich.

Ersichtlich ist an dem Sekundärhorizont der Figur 9b jedenfalls, dass die Produktwerte zur Breite und zur Durchbiegung, also diejenigen auf den Skalenarmen 7 und 9, noch eine zu große Toleranzspanne besitzen, während die physikalische Größe der Höhe auf dem Skalenarm 8 durchaus in einem eingeschränkten, vernünftigen Toleranzbereich liegt.

Zur Erfüllung der weiteren Steuerung und der Annäherung an das Ziel repräsentiert durch das Polygon 50* nach Figur 12, wird bei der Auswahl 91 eine andere Vorgehensweise eingeschlagen, die im Verfahrensschritt 93 stattfindet. Es werden nunmehr Goals vorgegeben, was anhand der folgenden Figuren zu erläutern ist.

Das Setzen eines Goals ist z.B. mit drei Vorgabewerten in **Figur 10b** im zweiten Sekundärhorizont 32 vorgenommen.

Der Wert für die Durchbiegung wird als Ziel 48 vorgegeben. Er soll auf dem Skalenarm 7 den Wert 0 haben (oder ihm zumindest sehr nahe kommen). Zwei weitere Goals 48a, 48b auf den beiden Produkt-Skalenarmen für Breite und Höhe, den Skalenarmen 8, 9 von Figur 2 und 3 entsprechend, werden ebenfalls platziert, wobei die drei vorgegebenen Goals 48, 48a, 48b durch eine Hilfslinie symbolisch verbunden sind, die aber nicht Bestandteil eines Polygons aus der Menge der im Korridor befindlichen Polygone ist.

Die vorgegebenen Zielwerte von Breite 92mm und Höhe 56mm führen zu einem weiter reduzierten Korridor 32"', der gegenüber dem bisherigen Korridor 32" stark verringert ist. Es ist anzunehmen, dass es keine Polygonfindung geben wird, die alle Vorgabewerte identisch erfüllt, aber das Darstellungs- und Berechnungsverfahren und das zugehörige Programm arbeitet bei einer Vorgabe von Goals so, dass die nächstliegenden Polygone ausgewählt werden. Hier sind Einstellungen dergestalt möglich, das beispielsweise der Abstand von einem gewählten Goal minimiert wird, oder ein Mittelwert von Abständen bei mehreren Goals als Entscheidungsgröße verwendet wird, welche Polygone für gesetzte Goals ausgewählt und zur Bildung des reduzierten Korridors verwendet werden können.

Der äußere Rand und der innere Rand des weiter reduzierten Korridors 32"' wird durch die Verbindung aller äußersten Punkte und durch die Verbindung aller innersten Punkte auf den vorhandenen fünf Skalenarmen realisiert, wie das bereits im Rahmen der Figur 2 für die äußere Grenze und innere Grenze 39a, 39b des dortigen Primärhorizonts 39 beschrieben war.

Der zuletzt stark reduzierte Horizont 32"' entsteht unter dem Einfluss sowohl des ersten, wie auch des zweiten Delimiters 49, 49a und gleichzeitig unter dem Einfluss der drei Goals 48, 48a und 48b, wie in den Figuren 10b und 10a jeweils eingezeichnet. Jeweils betroffen sind die Skalenarme 7, 8 und 9 sowie 3 und 4.

Die Steuerung im Bereich der Schritte 91, 92 und 93, also im Abschnitt 99 der Figur 7, kann ebenso anders herum erfolgen, also die Vorgabe von Delimitern 49 in der Kategorie der Ergebnisgrößen und die Vorgabe von Goals 48 in der Kategorie der Einstellgrößen.

Auch eine Mischung von Delimitern und Goals in einem jeweiligen kategorie-gleichen Sekundärhorizont ist möglich.

Die einzelnen Schritte 92 (Cluster bestimmen) und 93 (Goals vorgeben) entsprechen dabei einer Punktvorgabe und alternativ oder kumulativ einer Bereichsvorgabe durch Vorgabe oder Auswahl eines verbliebenen Bündels von Polygonen. Eine solche Bereichsfestlegung kann unten, oben oder beidseitig durch Delimiter erfolgen.

Eine Darstellung verbliebener Polygone zeigen die Sekundärhorizonte der Figuren 11a und 11b. In dem verbliebenen reduzierten Korridor 32'" bzw. 31"' sind im Beispiel der vier in Figuren 4 und 6 gezeigten Polygone nur zwei Polygone übrig. Eines davon wird neues Focus-Polygon 50*, das andere verbliebene Polygon wird nicht verwendet. Das neue Focus-Polygon, welches dem neuen Zustand oder dem neuen Sollwert und künftigen Ist-Wert der Extrusionsanlage entspricht, hat bei der Drehzahl den gewünscht hohen Wert, der deutlich oberhalb des vorgegebenen Mindestwertes durch den Delimiter 49 liegt, und hat bei der Kühlwassertemperatur gerade den durch den Delimiter 49a gesetzten Mindestwert. In der Terminologie der Ergebnisgrößen hat das erreichte Ziel 50* praktisch keine Durchbiegung des Kabelkanals, repräsentiert auf dem Skalenarm 7, und ist bei Höhe und Breite des extrudierten Kabelkanals sehr nahe den Goal-Vorgaben.

Die Darstellung der Figuren 11a und 11b ist nach Freigabe durch die "ausreichende Selektion" in Schritt 94 der Schritt 95 im Sinne der Darstellung von Details, hier aber noch im jeweiligen Sekundärhorizont. Die Zusammenfassung der Sekundärhorizonte zu einem Primärhorizont lässt die beiden identifizierten Polygone als zwei zusammenhängende Linienzüge erkennen, was Figur 12 verdeutlicht. Der hier abgebildete, reduzierte Korridor 39"' im Rahmen des Horizonts 39 korrespondiert mit den beiden stark eingeschränkten Sekundärkorridoren 32'" und 31"'.

Die vorgenommene Einstellung auf den neuen Systemzustand 50* wird in Schritt 96 erfolgen.

Die erwartete Durchbiegung der nach Höhe und Breite definierten Kabelkanäle liegt bei etwas mehr als 0 mm, wobei sich diese Durchbiegung auf dem Skalenarm 7 auf das geschnittene fertige Produkt nach der Abtrenneinrichtung g von Figur 1 bezieht, im Zuge der Weiterverarbeitung und Verpackung x.

In einer pauschalisierten Bewertung des Ergebnisses des reduzierten Horizonts 39"' kann gesagt werden, dass der Luftdruck auf dem Skalenarm 13 sich auf den gefundenen Status wenig auswirkt, obschon die enger liegenden Bereiche bei bspw. Skalenarm 5 (Massetemperatur) auf eine stärkere Einflussnahme dieses Parameters hinweisen.

Die bisher erläuterte Vorgehensweise, die vom Focus-Polygon 50 zum Ziel-Polygon 50* führt, kann auch mittels (einer Aufeinanderfolge) alphanumerischer Steuerungs-Eingaben erfolgen, was die Figur 13 verdeutlicht.

Hier sind die beschriebenen Kategorien der Einstell- und Ergebnisgrößen als Input und Output Parameter zusammengefasst. Eine entsprechende Darstellung der Kategorie der Störgrößen kann ebenso erfolgen (ohne gesonderte Darstellung).

Im unteren rechten Bereich der Figur 13 sind gesetzte Goals bei den Ergebnisgrößen zu erkennen. Die Suche nach nächstliegenden Polygonen, unter Berücksichtigung bereits gesetzter Delimiter (Restriktionen), wird durch ein Betätigen der Funktionsschaltfläche 47f (Search Feld) gestartet.

Unter den Einstellgrößen im unteren Abschnitt der Figur 13 sind bei den Größen "Kühlwasser" und "Drehzahl" in den hellen Feldern höhere untere Grenzwerte als in den dunklen Minima-Feldern. Diese höheren Werte resultieren aus einem grafischen Setzen der Delimiter 49 und 49a.

Das Setzen kann gleich-wirkend ebenso durch eine manuelle Eingabe von entsprechenden Zahlenwerten in diese hellen Anzeige/Eingabe-Felder erfolgen.

Gleichermaßen ergeben sich eventuelle Änderungen der Zahlenwerte in den hellen Zahlenfeldern der anderen Größen, die aus grafisch oder numerisch gesetzten Restriktionen resultieren, sobald ein Betätigen der Funktionsschaltfläche 47c (Restrict) erfolgt. Gleichzeitig wird dabei die zeichnerische Polygon-Darstellung von Korridorgrenzen aktualisiert.

Das Betätigen der Funktionsschaltfläche 47a (Horizon) bewirkt die flächige Anzeige von Horizont(en) bzw. Korridor(en). Ein Betätigen der Funktionsschaltfläche 47b (Show All) zeigt alle relevanten Polygone an. Ein Betätigen beider Funktionsschaltflächen 47a und 47b zeigt demnach die Polygone und die Flächendarstellungen. Ein Betätigen der Funktionsschaltfläche 47d (Reset) nimmt alle bisher gemachten Restriktionen zurück; die Werte in den sich entsprechenden hellen und dunklen Feldern stimmen dann wieder überein.

Ein Drücken oder Betätigen steht sinngemäß für ein "Aktivieren" der grafisch symbolisierten Schaltfläche.

In der Spalte unterhalb des Titels "Focus" (2. Spalte von rechts) werden die Werte des Polygons bzw. Prozessstatus 50* angezeigt, auf dem der aktuelle Focus liegt.

Es ist im praktischen Betrieb vorteilhaft, eine Mischung aus grafischer Polygon-Darstellung und manueller Zahleneingabe bei der Hand zu haben. Vorgabewerte nach Delimiter und Goal lassen sich über die Tastatur oder über ein Touchpanel leichter eingeben als durch ein Verlagern von grafischen Symbolen in einem grafischen Gesamtbild mit Hilfe eines Mauszeigers oder eines Touchpanels. Jedoch ist die Ergänzung der numerischen Darstellung um eine grafische Darstellung für eine bessere Übersicht vorteilhaft.

Leicht zu ermessen ist, dass die Übersicht über den Gesamtprozess in Figur 11a, 11b oder in Figur 12 sofort erhalten wird, hingegen die Zahlenkolonne in Figur 13 (46 zeigt einen Ausschnitt der in 38a gespeicherten Daten) diese Übersicht nicht vermittelt. Andererseits kann ein Einstellwert in den hell ersichtlichen Feldern von Abschnitt 47 der Figur 13 leichter eingetastet (mit Keyboard eingegeben) werden, als dass eine Grenze durch einen Delimiter 49 in Figur 8a oder 9a grafisch vorgegeben und verschoben werden kann.

Zur Verknüpfung der beiden Eingaben ist eine Wechselbeziehung zwischen beiden Darstellungsvarianten gegeben.

Setzt man numerisch einen Delimiter, erscheint dessen grafische Visualisierung inklusive der eventuellen Änderungen der Horizonte bzw. Korridore. Setzt man alternativ grafisch einen Delimiter, werden die numerischen Werte in den hell ersichtlichen Feldern von 47 entsprechend aktualisiert. Gleiches gilt für die Vorgabe von Goals.

Die bisherigen Betrachtungen haben das Arbeiten mit Polygonen bzw. Prozessstatus erläutert, die im Speicher 38a, beispielsweise als Aufzeichnung von Produktionsverläufen bzw. durchgeführten Experimenten, bereits vorliegen und somit anzeigbar sind, wie in Figur 12. Dort ausgehend vom Focus-Polygon 50* kann nun die Frage gestellt werden, welche Vor- und Nachteile für den Produktionsprozess zu erwarten wären, wenn die Eintauchtiefe des extrudierten Profils erhöht würde. Da hierzu kein Erfahrungswissen vorliegt, werden unter Verwendung bereits bekannter Polygone in der Nachbarschaft des Focus-Polygons 50* neue Prozessstatus-Polygone berechnet, beispielsweise mittels Response-Surface-Methoden, wie sie aus Verfahren der optimalen Versuchsplanung (Design of Experiments) bekannt sind.

Das Aktivieren der Funktionsschaltfläche 47e (Forecast) startet diese Berechnungen, erzeugt entsprechende Vorschau-Polygone, wie beispielsweise 51*, 52*, 53*, und stellt diese zusätzlich zu bereits vorliegenden Statuspolygonen, wie beispielsweise 50*, grafisch dar. In Figur 15a und 15b ist dies für die Kategorien der Einstell- und Ergebnisgrößen gezeigt.

Der hier beschriebene Arbeitsschritt "Forecasts berechnen" ist im Ablaufplan von Figur 7 als von der Weiche/Abfrage auswählbare Aktivität 97 eingeordnet.

Befinden sich in der nun erweiterten Menge von Prozessstatus-Polygonen auch solche, die über die "alten" Horizonte 31 und 32 bzw. Korridore 31'" und 32'" hinausragen, so kann das Arbeiten nach "Cluster" 92 oder "Goal" 93 in die gewünschte Zielrichtung fortgesetzt werden.

Die Güte der vorausberechneten Forecast-Status ist auch im laufenden Produktionsprozess evaluierbar. Dazu werden die Ausgangswerte der Einstellgrößen des Prozessstatus 50* in kleinen Schritten in Richtung der Sollvorgaben, wie sie beispielsweise dem Forecast-Status 53* entsprechen, geändert. Gleichzeitig werden die dabei automatisch erfassten oder interaktiv beobachteten jeweiligen Ist-Werte der Ergebnisgrößen mit deren vorausberechneten Soll-Werten verglichen. Sobald sich bei dieser sukzessiven Vorgehensweise, wie etwa bei einem Forecast-Status 52*, zu große Abweichungen zwischen dem vorab berechneten und experimentell oder im Produktionsprozess erfassten Prozessstatus ergeben, kann beispielsweise das Polygon 52* als Ausgangspunkt für neue Forecast-Berechnungen dienen.

Es stehen für das Arbeiten in den Entscheidungshorizonten drei unterschiedliche Vorgehensweisen im Vordergrund, die durch den Benutzer sowohl mittels grafischer Interaktion via "Mauszeiger" (oder sonstigem Anzeigegerät 38) als auch mittels alphanumerischer Eingabe via Tastatur (bspw. auch Touchpanel 38) durchgeführt werden können.

Beim Steuerungsverfahren 92 nach "Cluster" wird eine Teilmenge der im Prozess-Speicher 38a vorliegenden Prozessstatus' selektiert. Diese Auswahl erfolgt im Allgemeinen sukzessive bei 99, mit dem Ziel einer Herausarbeitung und Analyse von aktuell in Frage kommenden Prozessstatus', welche die vom Benutzer gewünschten Vorgaben bezüglich der Kennwerte von Einstell-, Ergebnis- oder Störgrößen berücksichtigen, wie Figuren 8a, 8b, 9a, 9b zeigen.

Die dabei fortschreitende Verringerung der Anzahl aktuell im Blickpunkt des Interesses stehender Status' bzw. Linienkörper ermöglicht dem Benutzer eine Konzentration auf für ihn wesentliche Kriterien, da damit nur noch die Kennwerte weniger, "benachbarter" Status' miteinander in Bezug gebracht werden müssen. Die mit dieser stufenweisen Vorgehensweise verbundene zunehmende Transparenz entspricht gleichsam einem "Zoom" in Details des Produktionsprozesses, insbesondere auch durch die (möglicherweise alternierende) getrennte oder gemeinsame Betrachtung der geclusterten Linienkörper in den jeweiligen sekundären Horizonten.

Bewerkstelligt wird das Steuerungsverfahren nach "Cluster" durch das Platzieren eines oder mehrerer grafischer Symbole 49 mittels eines "Mauszeigers" auf einem oder mehreren der Skalenarme. Dadurch werden (im mathematischen Sinne) Schranken für die Kennwerte auf den jeweiligen Skalenarmen gesetzt. Die Berücksichtigung dieser Restriktionen bewirkt eine Auswahl zulässiger Prozessstatus', und die dadurch selektierte Teilmenge der verbliebenen Linienkörper kann dann zur besseren visuellen Darstellung als kontrastierender Korridor 31', 32', 31 ", 32", 39"' hervorgehoben werden. Innerhalb dieser restringierten, besser überschaubaren Teilmenge ist dann eine einfache Abwägung von alternativen Prozessstatus' möglich. Der Nutzer ist somit in der Lage, sich eventuell für einen neuen, "besseren" Prozessstatus zu entscheiden und eine entsprechende Änderung der Betriebseinstellungen der Produktionsanlage vorzunehmen.

Das Steuerungsverfahren 92 nach "Cluster" kann ebenso auch mittels Tastatureingaben erfolgen. Dazu sind in den hellen Feldern der Spalten "obere" und "untere" Grenzen von Figur 13 frei wählbare Kennwerte für die gewünschte Einschränkung der jeweiligen physikalischen Größe einzugeben. Die Auswirkungen dieser Eingaben können unmittelbar in der aktualisierten Grafik verfolgt und interpretiert werden. Umgekehrt hat auch das oben vorgestellte Platzieren eines grafischen Delimiter-Symbols die Aktualisierung des entsprechenden Tabellenfeld-Inhaltes entsprechend Figur 13 zur Folge.

Je nach den speziellen Bedürfnissen des jeweiligen Nutzers wird sich die Verwendung grafischer Symbole, die Verwendung der Tatstatur oder eine Mischung der Verwendung beider Methoden als vorteilhafter für die jeweilige Anwendungs-Situation herausstellen.

Das Steuerungsverfahren 93 nach "Goal" ist angezeigt, wenn der Nutzer bezüglich eines Kennwertes oder einer Gruppe von Kennwerten eines angestrebten Prozessstatus relativ präzise Wunschvorstellungen (daher die Bezeichnung "Goal") hat, die jedoch näherungsweise realistisch sein sollten (sowohl als Einzelwerte, als auch als gemeinsame Gruppen-Kennwerte eines Status). Diese "Goal"-Werte werden i.A. auf Abschnitten der Skalenarme innerhalb der Entscheidungshorizonte (vgl. insbes. Figur 10b) liegen, sie müssen aber nicht notwendig Kennwerte darstellen, die im Prozess-Speicher gespeichert sind.

Der Nutzer kann jetzt wiederum auch das Setzen von Goals auf zwei Arten vornehmen: Einerseits durch das Platzieren eines oder mehrerer grafischer Symbole 48 mittels eines "Mauszeigers" auf einem oder mehreren der Skalenarme (nach Figur 10b), andererseits durch die Eingabe der gewünschten Kennwerte als Vorgabe der jeweiligen physikalischen Größe mittels der Tatstatur, wie in der rechten Spalte von Figur 13 beispielhaft gezeigt.

Das Aktivieren der Schaltfläche "Search" 47f in Figur 13 startet nun eine Suche im Prozess-Speicher 38a nach Prozessstatus', die zu dem i. A. nicht bezüglich aller Kennwerte vorgegebenen Goal-Status "ähnlich" oder "benachbart" sind. Diese Such-Anfrage an den Prozess-Speicher setzt das Vorliegen bzw. die Definition eines Ähnlichkeitsmaßes (einer Metrik) auf der Menge der Prozessstatus' voraus. Eine Fülle von Ähnlichkeitsmaßen ist aus der Mathematik bzw. aus der Versuchsplanung bekannt, die Auswahl oder Definition eines geeigneten Maßes richtet sich nach den jeweiligen Bedürfnissen oder Kenntnissen des Nutzers. Bei der Suche nach den Prozessstatus', welche die Goal-Vorgaben approximieren, können die oben diskutierten Restriktionen (Delimiter bzw. Lower/Upper Bounds) wahlweise zusätzlich berücksichtigt oder ignoriert werden.

Die Anzahl x der "Antworten" auf die Such-Anfrage, d.h. die x im Prozess-Speicher selektierten Prozessstatus' mit den y (kleiner/gleich x) kleinsten Abstandswerten zum "Goal", ist ebenfalls vom Nutzer wählbar. Die x Resultate können in den Entscheidungshorizonten als Linienkörper kontrastierend hervorgehoben werden, wie in den Figuren 11a, 11b, 12, 14a und 14b veranschaulicht, sie können parallel dazu auch in der Tabelle 46 von Figur 13 in ihrer Reihenfolge entsprechend sortiert und hervorgehoben dargestellt werden (was in 46 nicht gezeigt, aber leicht vorstellbar ist).

Als Basis, aktueller Ausgangspunkt oder Mittelpunkt für das Steuerungsverfahren 97 nach "Forecast" dient das "Focus"-Polygon 50 in Figur 2a bzw. Figur 3 ff oder 50* in Figur 11a, 11b, 12, 13, 14a und 14b. Dessen Auswahl, Markierung oder grafische Hervorhebung kann wiederum via Tatstatureingabe oder grafischer Interaktion erfolgen. Dabei erhält durch Eingabe oder Auswahl der Datensatz-Nummer (etwa mittels Scroll-Funktion) ein in der Datenbank 38a gespeicherter Prozessstatus den Focus. Alternativ kann dies durch das Markieren einer Gruppe zusammengehörender, linienförmig miteinander verbundener Kennwerte in einem der Entscheidungshorizonte mittels eines "Mauszeigers" erfolgen. Das Focus-Polygon wird daraufhin grafisch hervorgehoben in den Entscheidungshorizonten angezeigt, gleichzeitig werden dessen Kennwerte in der Tabelle 46 von Figur 13 gekennzeichnet und in der Focus-Spalte von Figur 13 dargestellt.

Das so festgelegte Focus-Polygon bzw. der entsprechende Prozessstatus dient nun als Zentrum für eine darauf aufbauende Erzeugung von "virtuellen" Prozessstatus' in dessen Nachbarschaft, mit dem Ziel, den Prozess-Speicher 38a um zusätzliche, i.A. approximative Prozessstatus' zu erweitern. Die Linienkörper dieser neu generierten, gleichsam aus der "Keimzelle" Focus-Polygon hervorgegangenen, Prozessstatus' können innerhalb der bereits bekannten Entscheidungshorizonte liegen, sie können jedoch durchaus auch, zumindest bezüglich einiger Skalenarme, über die bisherigen Grenzen hinausragen - was für die Exploration neuer, alternativer Prozessstatus' von großem Interesse ist. Die Polygone 51*, 52* und 53* in Figuren 15a,15b illustrieren diesen Sachverhalt.

Das Aktivieren der Schaltfläche "Forecast" 47e in Figur 13 startet die Berechnung der Forecast-Polygone. Dabei kommen wiederum bekannte Verfahren der Mathematik, insbesondere aus dem Gebiet der Versuchsplanung (Response-Surface-Methods), zur Anwendung. Auch hier, bei der Generierung approximativer, zusätzlicher Prozessstatus', können die oben erläuterten Restriktionen (Delimiter bzw. Lower/Upper Bounds) wahlweise zusätzlich berücksichtigt oder ignoriert werden.

Wie beim Steuerungsverfahren nach "Goal" ist hier ebenfalls die Anzahl x' der gewünschten Forecast-Polygone vom Nutzer wählbar. Darüber hinaus kann hier ein Wert für die Schrittweite bzw. Distanz gewählt werden, der ebenso im Sinne des oben bereits erwähnten Ähnlichkeits- bzw. Abstandsmaßes als Grundlage für die Berechnung der Forecast-Prozessstatus' und deren "Nähe" zueinander dient. Die x' Resultate können wiederum in den Entscheidungshorizonten als Linienkörper kontrastierend hervorgehoben werden (Figuren 15a,15b), sie können parallel dazu auch in der Tabelle 46 von Figur 13 in ihrer Reihenfolge entsprechend sortiert und hervorgehoben dargestellt werden. Das ist in 46 nicht gezeigt, aber leicht vorstellbar.

Eine Analyse der somit generierten Forecast Prozess-Status' kann nun wiederum mit einem der oben diskutierten Verfahren ("Cluster" bzw. "Goal") erfolgen. Diejenigen Prozessstatus', deren Kennwerte dabei eine Verbesserung hinsichtlich der Wünsche des Nutzers versprechen, können dann als Grundlage für durchzuführende Prozesseinstellungen dienen. Die tatsächliche technische Überprüfung solcher Prozessstatus' wird danach durch entsprechendes Setzen der Kennwerte in den Einstellgrößen vorgenommen, die Beobachtung der tatsächlich resultierenden Kennwerte in den Ergebnisgrößen dient schließlich der Bewertung der Forecast-Polygone. Diese Vorgehensweise von vorausschauender Erzeugung und Analyse hypothetischer Prozessstatus' und daran anschließender, explorierender Verifikation von geeignet erscheinenden Prozessstatus'-Alternativen wird i. A. in mehreren Schritten voranschreiten. Dies kann in der Durchführung eigenständiger Produktions-Experimente oder aber in kleinen Schritten innerhalb eines aktuell laufenden, realen Produktionsprozesses erfolgen.

## Patentansprüche

1. **Verfahren** der Prozessbeeinflussung mit zumindest einem Einstellen, Voreinstellen; Überwachen, Steuern, Abändern, Optimieren, Probeherstellen, Analysieren,
bei einem extrudierenden Produktionsprozess eines lang-gestreckten Extrusionsbauteils (20),
wobei zur Prozessbeeinflussung eine Vielzahl von Skalenarmen (1 bis 16) von einer Darstellungs-Einrichtung (38)
- nicht aufeinander liegend,
- voneinander beabstandet und
- zumindest teilweise divergierend (2,3;6,7;10,11)
dargestellt oder aufgetragen werden, welche Skalenarme mit physikalischen Größen beziffert sind und unter den bezifferten Skalenarmen (1 bis 16) zumindest folgende beide Kategorien von Skalenarmen sind,
(a) **zumindest ein** Ergebnisgrößen-Skalenarm (5 bis 9) zur Repräsentierung einer Ergebnisgröße des Extrusionsbauteils (20) oder aus dem Extrusionsprozess, welcher Skalenarm ein physikalisches Ergebnis als physische Eigenschaft des Bauteils (20), wie ein Maß einer Wand (21,22), bzw. eine Prozessgröße des Prozesses repräsentiert, wie eine Viskosität (6) oder eine Temperatur (5) im Zuge des extrudierenden Produktionsprozesses;
(b) **zumindest zwei** eigenständige Einstellgrößen-Skalenarme (14 bis 16, 1 bis 4) zum extrudierenden Produktionsprozess, welche nicht identische Prozessgrößen repräsentieren, welche jede davon durch eine eigene Einstellung in dem Produktionsprozess vorgebbar ist und in dem Produktionsprozess entsteht oder messbar ist;
um mit den **zumindest drei Skalenarmen** (1 bis 9, 14 bis 16) **einen ersten Horizont** (39,34,34a,34b) von der Darstellungs-Einrichtung (38) aufzuspannen, der sich optisch gegenüber einem inneren und einem äußeren Umfeld (35,36) abhebt; und
um eine Prozessbeeinflussung aus zumindest dem ersten Horizont (39, 34) zu erlauben oder zu ermöglichen oder zu erleichtern oder zu erweitern, wobei eine Prozessbeeinflussung ausgewählt ist aus der Gruppe: Einstellen, Voreinstellen, Überwachen, Steuern, Abändern, Optimieren, Probeherstellen, Analysieren.

2. Verfahren nach Anspruch 1, wobei im Rahmen eines Bereitstellens von Prozessdaten für die Prozessbeeinflussung eine Menge von Kennwerten des Produktionsprozesses und/oder des Extrusionsbauteils (20), für eine Speicherung in einem Datenspeicher (38a) einer Datenbank neu berechnet wird, und auf den dargestellten Skalenarmen (1 bis 16) aufgetragen wird, so dass sich ein Forecast-Horizont bildet.

3. Verfahren nach einem der voranstehenden Ansprüche, wobei eine Menge von Kennwerten des Produktionsprozesses und/oder des Extrusionsbauteils (20), soweit in einem Datenspeicher (38a) einer Datenbank gespeichert, auf den dargestellten Skalenarmen (1 bis 16) aufgetragen wird,
um den ersten Horizont zu bilden.

4. Verfahren nach Anspruch 3, wobei ein äußerer durchgehender Rand und ein innerer durchgehender Rand (39a,39b) gebildet werden, durch Verbinden aller Maxima bzw. Minima der Kennwerte, die auf den Skalenarmen (1 bis 16) aufgetragen sind, und der erste Horizont (39) innerhalb der Ränder dadurch gebildet wird, dass er gegenüber dem inneren und äußeren Umfeld (35,36) außerhalb der Ränder auf dem Display kontrastierend hervorgehoben wird.

5. Verfahren nach Anspruch 3, wobei
in der Menge von Kennwerten des Produktionsprozesses und/oder des Extrusionsbauteils (20) jeweils zusammengehörende Kennwerte miteinander linienförmig verbunden werden,
wobei jeweils zusammengehörende Kennwerte einen Status des Produktionsprozesses und/oder des Extrusionsbauteils (20) umschreiben oder definieren,
und durch die Vielzahl der Linien der erste Horizont (34,34a,34b) bereits kontrastierend hervorgehoben ist.

6. Verfahren nach Anspruch 1, wobei zumindest drei Skalenarme derselben Kategorie vorgesehen sind, und mit diesen zumindest ein eigener weiterer Horizont (31,32) von der Darstellungs-Einrichtung (38) dargestellt wird, ohne die jeweils nicht-kategoriegleichen Skalenarme mit darzustellen.

7. Verfahren nach Anspruch 6, wobei die zumindest drei Skalenarme (5 bis 9) der Kategorie der Ergebnisgrößen zugehören, zur Bildung eines eigenen kontrastierenden Ergebnisgrößen-Horizonts (32).

8. Verfahren nach Anspruch 6 oder 7, wobei die zumindest drei Skalenarme (2,3,4) der Kategorie der Einstellgrößen zugehören, zur Bildung eines eigenen kontrastierenden Einstellgrößen-Horizonts (31).

9. Verfahren nach Anspruch 6, 7 oder 8, wobei die zumindest drei Skalenarme einer Kategorie der Störgrößen zugehören, zur Bildung eines eigenen kontrastierenden Störgrößen-Horizonts (33,33a).

10. Verfahren nach Anspruch 1, wobei die physikalischen Größen der Bezifferung der Skalenarme zumindest teilweise qualitative Angaben oder Einheiten als quantitative Angaben sind.

11. Verfahren nach Anspruch 1, wobei die physikalischen Größen quantitative Größen im Sinne von physikalischen Einheiten sind, wie Temperatur, Druck, Höhe oder Breite.

12. Verfahren nach Anspruch 1, wobei die physikalischen Größen qualitative Größen im Sinne von pauschalierten Angaben sind.

13. Verfahren nach Anspruch 1, wobei die physikalischen Größen Vorgaben des Produktionsprozesses sind, wie Granulattyp für den extrudierenden Produktionsprozess oder Recyclinganteil im Granulat oder Farbe des Extrusionsbauteils (20).

14. Verfahren nach Anspruch 1, wobei zumindest ein weiterer mit physikalischen Größen bezifferter Skalenarm (10 bis 13)
- nicht aufeinander liegend,
und
- beabstandet von den anderen Skalenarmen (5 bis 9, 14 bis 16, 1 bis 4),
von der Darstellungs-Einrichtung (38) dargestellt wird,
welcher weitere Skalenarm (10 bis 13) eine Störgröße repräsentiert, die im extrudierenden Produktionsprozess auftritt, ohne durch eine Ergebnisgröße oder eine der Einstellgrößen direkt veranlasst oder hervorgerufen zu sein.

15. Verfahren nach Anspruch 1, wobei die Einstellgrößen-Skalenarme (14 bis 16, 1 bis 4) zum extrudierenden Produktionsprozess zumindest zwei nicht identische und nicht linear abhängige Prozessgrößen repräsentieren.

16. Verfahren nach Anspruch 12, wobei die Angaben 'hoch', 'flach' und 'normal' oder 'trocken', 'standard' und 'feucht' sind.

17. Verfahren nach einem der vorhergehenden Ansprüche 1 bis 16, wobei die Auswahl eines oder mehrerer Status' des Produktionsprozesses und/oder Extrusionsbauteils durch ein Platzieren eines oder mehrerer grafischer Symbole mittels eines Mauszeigers auf einem oder mehreren der Skalenarme erfolgt, zur Festlegung zu berücksichtigender Restriktionen und zur Bildung eines kontrastierenden Korridors.

18. Verfahren nach einem der vorhergehenden Ansprüche 1 bis 16, wobei die Auswahl eines oder mehrerer Status' des Produktionsprozesses und/oder Extrusionsbauteils durch eine Eingabe von frei wählbaren Kennwerten für die Einschränkung der jeweiligen physikalischen Größe mittels der Tastatur erfolgt, zur Festlegung zu berücksichtigender Restriktionen und zur Bildung einer Teilmenge restringierter Status'.

19. Verfahren nach einem der vorhergehenden Ansprüche 1 bis 18, wobei die Auswahl eines oder mehrerer Status' des Produktionsprozesses und/oder Extrusionsbauteils durch das Platzieren eines oder mehrerer grafischer Symbole mittels eines Mauszeigers auf einem oder mehreren der Skalenarme erfolgt, zur Festlegung zu approximierender Vorgaben und zur Bildung eines kontrastierenden Korridors.

20. Verfahren nach einem der vorhergehenden Ansprüche, wobei die Auswahl eines oder mehrerer Status' des Produktionsprozesses und/oder Extrusionsbauteils durch die Eingabe von frei wählbaren Kennwerten für eine Vorgabe der jeweiligen physikalischen Größe mittels einer Tastatur als Eingabegerät erfolgt, zur Festlegung zu approximierender Vorgaben und zur Bildung einer Teilmenge restringierter Status'.

21. Verfahren nach einem der vorhergehenden Ansprüche 1 bis 16, wobei das Fokussieren auf einen Status des Produktionsprozesses und/oder Extrusionsbauteils durch das Markieren einer Gruppe zusammengehörender, linienförmig miteinander verbundener Kennwerte des gewünschten Status mittels eines Mauszeigers erfolgt.

22. Verfahren nach einem der vorhergehenden Ansprüche 1 bis 16, wobei das Fokussieren auf einen Status des Produktionsprozesses und/oder Extrusionsbauteils durch die Eingabe oder Auswahl der Datensatz-Nummer eines in einer Datenbank gespeicherten gewünschten Status mittels einer Tastatur erfolgt.

23. Verfahren nach einem der vorhergehenden Ansprüche 1 bis 16, wobei die Berechnung einer Menge von - bevorzugt interpolierender oder extrapolierender - Näherungen für den Status des Produktionsprozesses und/oder Extrusionsbauteils unter Verwendung eines ausgewählten Status und weiterer, dazu benachbarter Status' über Verfahren der Versuchsplanung erfolgt.

24. Verfahren nach einem der vorhergehenden Ansprüche 1 bis 18, wobei die Auswahl zumindest eines Status' **des Produktionsprozesses** durch das Platzieren zumindest eines grafischen Symbols mittels eines Mauszeigers auf zumindest einem der mehreren Skalenarme erfolgt, zur Festlegung einer zu approximierenden Vorgabe und dadurch zur Bestimmung eines neuen kontrastierenden Korridors im Horizont der Prozessbeeinflussung.

25. Verfahren nach einem der vorhergehenden Ansprüche 1 bis 18 oder 24, wobei die Auswahl zumindest eines Status' **des Extrusionsbaüteils** durch das Platzieren zumindest eines grafischen Symbols mittels eines Mauszeigers auf zumindest einem der mehreren Skalenarme erfolgt, zur Festlegung einer zu approximierenden Vorgabe und dadurch zur Bestimmung eines neuen kontrastierenden Korridors im Horizont der Prozessbeeinflussung.

26. Verfahren nach Anspruch 2, wobei die Menge von neu berechneten Kennwerten des Produktionsprozesses auf bereits gespeicherten Kennwerten basiert oder näherungsweise über ein bekanntes Verfahren der Versuchsplanung neu berechnet wird.

27. Verfahren nach Anspruch 1, wobei das Extrusionsbauteil ein im Querschnitt zumindest teilkastenförmiger Kabelkanal ist.

28. **Displaydarstellung** zur Ermöglichung einer Prozessbeeinflussung mit zumindest einem
Einstellen, Voreinstellen, Überwachen, Steuern, Abändern, Optimieren, Probeherstellen, Analysieren,
in einem extrudierenden Produktionsprozess eines langgestreckten Extrusionsbauteils (20), insbesondere eines zumindest teilkastenförmigen Kabelkanals,
wobei zu der Prozessbeeinflussung eine Vielzahl von Skalenarmen (1 bis 16) von einer Darstellungs-Einrichtung (38) mit einem optischem Display
- nicht aufeinander liegend,
- voneinander beabstandet und
- zumindest teilweise divergierend (2,3,6,7;10,11)
dargestellt sind, welche Skalenarme mit physikalischen Größen beziffert sind und unter den bezifferten Skalenarmen (1 bis 16) zumindest folgende beide Kategorien von Skalenarmen sind
(a) **zumindest ein** Ergebnisgrößen-Skalenarm (5 bis 9) zur Repräsentierung einer Ergebnisgröße des Extrusionsbauteils (20) oder aus dem Extrusionsprozess, welcher Skalenarm ein physikalisches Ergebnis als physische Eigenschaft des Bauteils bzw. eine Prozessgröße des Prozesses repräsentiert, wie ein Maß einer Wand (21,22) des Bauteils, eine Viskosität (6) oder eine Temperatur (5) im Zuge des extrudierenden Produktionsprozesses;
(b) **zumindest zwei** eigenständige Einstellgrößen-Skalenarme (14 bis 16, 1 bis 4) zum extrudierenden Produktionsprozess, welche nicht identische Prozessgrößen repräsentieren, welche jede davon durch eine eigene Einstellung in dem Produktionsprozess vorgebbar ist, um im Produktionsprozess zu entstehen oder messbar zu sein;
wobei über die **zumindest drei Skalenarme** (5 bis 9, 14 bis 16, 1 bis 4) **ein erster Horizont** (39,34,34a,34b) auf dem optischen Display der Darstellungseinrichtung (38) aufgespannt ist, der sich optisch gegenüber einem inneren und einem äußeren Umfeld (35,36) auf dem Display abhebt.

29. Displaydarstellung nach Anspruch 28, wobei die Einstellgrößen-Skalenarme (14 bis 16, 1 bis 4) zum extrudierenden Produktionsprozess zumindest zwei nicht identische und nicht linear abhängige Prozessgrößen repräsentieren.

## Claims

1. **Method** for controlling a process comprising at least an adjustment, presetting, monitoring, control, alteration, optimisation, production of samples and analysis, in an extrusion production process of an elongate extruded component (20), wherein, for the purpose of controlling the process, a plurality of graduated arms (1 to 16) are shown or plotted by a display device (38) such that
- they are not on top of one another,
- they are spaced apart from one another and
- at least some are diverging (2, 3; 6, 7; 10, 11),
which graduated arms are numbered with physical variables and at least the following two categories of graduated arms are covered by the numbered graduated arms (1 to 16),
(a) **at least one** result variable graduated arm (5 to 9) for representing a result variable either of the extruded component (20) or from the extrusion process, which graduated arm represents a physical result as a physical property of the component (20), such as a size of a wall (21, 22), or a process variable of the process, such as a viscosity (6) or a temperature (5) during the extrusion production process;
(b) **at least two** independent process parameter graduated arms (14 to 16, 1 to 4) which relate to the extrusion production process and represent non-identical process variables, each of which can be predetermined by a separate adjustment in the production process and occurs or can be measured in the production process;
in order to span **a first horizon** (39, 34, 34a, 34b) of the display device (38) with the **at least three graduated arms** (1 to 9, 14 to 16), which horizon visually stands out against an inner and an outer environment (35, 36); and
in order to allow or enable or facilitate or expand a process control from at least the first horizon (39, 34), wherein a process control is selected from the group of adjustment, presetting, monitoring, control, alteration, optimisation, production of samples and analysis.

2. Method according to claim 1, wherein, in the context of providing process data for the process control, a number of characteristics of the production process and/or of the extruded component (20) are recalculated for storage in a data store (38a) of a database, and are plotted on the displayed graduated arms (1 to 16) such that a forecast horizon is formed.

3. Method according to either of the preceding claims, wherein a number of characteristics of the production process and/or of the extruded component (20), insofar as they are stored in a data store (38a) of a database, are plotted on the displayed graduated arms (1 to 16) to form the first horizon.

4. Method according to claim 3, wherein an outer continuous border and an inner continuous border (39a, 39b) are formed by combining all the maximums and minimums of the characteristics plotted on the graduated arms (1 to 16), and the first horizon (39) is formed inside the borders by said horizon being highlighted in a contrasting manner on the display with respect to the inner and outer environments (35, 36) outside the borders.

5. Method according to claim 3, wherein matching characteristics within the number of characteristics of the production process and/or of the extruded component (20) are interconnected in a linear manner, wherein matching characteristics describe or define a status of the production process and/or of the extruded component (20), and the first horizon (34, 34a, 34b) is already highlighted in a contrasting manner by the plurality of lines.

6. Method according to claim 1, wherein at least three graduated arms of the same category are provided and at least one separate, additional horizon (31, 32) is displayed together therewith by the display device (38), **without** also displaying therewith the graduated arms that are not of the same category.

7. Method according to claim 6, wherein the at least three graduated arms (5 to 9) belong to the result variables category in order to form a separate, contrasting result variable horizon (32).

8. Method according to either claim 6 or claim 7, wherein the at least three graduated arms (2, 3, 4) belong to the process parameters category in order to form a separate, contrasting process parameter horizon (31).

9. Method according to any of claims 6 to 8, wherein the at least three graduated arms belong to a disturbance variable category in order to form a separate, contrasting disturbance variable horizon (33, 33a).

10. Method according to claim 1, wherein at least some of the physical variables of the numbering of the graduated arms are qualitative data or units in the form of quantitative data.

11. Method according to claim 1, wherein the physical variables are quantitative variables in terms of physical units, such as temperature, pressure, height or width.

12. Method according to claim 1, wherein the physical variables are qualitative variables in terms of approximated data.

13. Method according to claim 1, wherein the physical variables are specifications for the production process, such as the type of granule for the extrusion production process or the recycled content of the granules or the colour of the extruded component (20).

14. Method according to claim 1, wherein at least one additional graduated arm (10 to 13) numbered with physical variables is shown by the display device (38) such that
- they are not on top of one another,
and such that
- they are spaced apart from the other graduated arms (5 to 9, 14 to 16, 1 to 4) which additional graduated arm (10 to 13) represents a disturbance variable which occurs in the extrusion production process, without being directly caused or brought about by a result variable or one of the process parameters.

15. Method according to claim 1, wherein the process parameter graduated arms (14 to 16, 1 to 4) relating to the extrusion production process represent at least two non-identical and non-linear dependent process variables.

16. Method according to claim 12, wherein the pieces of information are 'high', 'flat' and 'normal' or 'dry', 'standard' and 'moist'.

17. Method according to any of the preceding claims 1 to 16, wherein one or more statuses of the production process and/or of the extruded component are selected by placing one or more graphic symbols on one or more of the graduated arms by means of a cursor in order to establish restrictions to be taken into account and to form a contrasting corridor.

18. Method according to any of the preceding claims 1 to 16, wherein one or more statuses of the production process and/or of the extruded component are selected by inputting, by means of the keypad, freely selectable characteristics for restricting the respective physical variables in order to establish restrictions to be taken into account and to form a subset of restricted statuses.

19. Method according to any of the preceding claims 1 to 18, wherein one or more statuses of the production process and/or of the extruded component are selected by placing one or more graphic symbols on one or more of the graduated arms by means of a cursor in order to establish specifications to be approximated and to form a contrasting corridor.

20. Method according to any of the preceding claims, wherein one or more statuses of the production process and/or of the extruded component are selected by inputting, by means of a keypad as an input apparatus, freely selectable characteristics for specifying the respective physical variables in order to establish specifications to be approximated and to form a subset of restricted statuses.

21. Method according to any of the preceding claims 1 to 16, wherein one status of the production process and/or of the extruded component is focused upon by highlighting, by means of a cursor, a group of matching, linear, interconnected characteristics of the desired status.

22. Method according to any of the preceding claims 1 to 16, wherein one status of the production process and/or of the extruded component is focused upon by inputting or selecting, by means of a keypad, the dataset number of a desired status stored in a database.

23. Method according to any of the preceding claims 1 to 16, wherein a number of preferably interpolating or extrapolating approximations for the status of the production process and/or of the extruded component is calculated using a selected status and additional, adjacent statuses by means of experimental design methods.

24. Method according to any of the preceding claims 1 to 18, wherein at least one status of **the production process** is selected by placing at least one graphic symbol on at least one of the plurality of graduated arms by means of a cursor in order to establish a specification to be approximated and thus to determine a new, contrasting corridor in the horizon of the process control.

25. Method according to any of the preceding claims 1 to 18 or 24, wherein at least one status **of the extruded component** is selected by placing at least one graphic symbol on at least one of the plurality of graduated arms by means of a cursor in order to establish a specification to be approximated and thus to determine a new, contrasting corridor in the horizon of the process control.

26. Method according to claim 2, wherein the number of newly calculated characteristics of the production process is based on previously stored characteristics or is recalculated approximately by means of a known experimental design method.

27. Method according to claim 1, wherein the extruded component is a cable duct having a cross section which is in the shape of a box at least in part.

28. **Display device** for allowing for process control comprising at least an adjustment, presetting, monitoring, control, alteration, optimisation, production of samples and analysis
in an extrusion production process of an elongate extruded component (20), in particular a cable duct which is in the shape of a box at least in part,
wherein, for the purpose of controlling the process, a plurality of graduated arms (1 to 16) are shown by a display device (38) having an optical display such that
- they are not on top of one another,
- they are spaced apart from one another and
- at least some are diverging (2, 3; 6, 7; 10, 11),
which graduated arms are numbered with physical variables and at least the following two categories of graduated arms are covered by the numbered graduated arms (1 to 16),
(a) **at least one** result variable graduated arm (5 to 9) for representing a result variable either of the extruded component (20) or from the extrusion process, which graduated arm represents a physical result as a physical property of the component or a process variable of the process, such as a size of a wall (21, 22) of the component, or a viscosity (6) or a temperature (5) during the extrusion production process;
(b) **at least two** independent process parameter graduated arms (14 to 16, 1 to 4) which relate to the extrusion production process and represent non-identical process variables, each of which can be predetermined by a separate adjustment in the production process so as to occur or be measurable in the production process;
wherein **a first horizon** (39, 34, 34a, 34b) is spanned on the optical display of the display device (38) by the **at least three graduated arms** (5 to 9, 14 to 16, 1 to 4) and visually stands out on the display against an inner and an outer environment (35, 36).

29. Display device according to claim 28, wherein the process parameter graduated arms (14 to 16, 1 to 4) relating to the extrusion production process represent at least two non-identical and non-linear dependent process variables.

## Revendications

1. **Procédé** pour influencer un processus avec au moins un réglage, un préréglage, une surveillance, une commande, une modification, une optimisation, une fabrication d'échantillon, une analyse dans un procédé de production par extrusion d'un composant extrudé très allongé (20), dans lequel, pour influencer le processus, on représente ou on trace une multiplicité de bras de cadran (1 à 16) d'un dispositif de représentation (38)
- non situés l'un sur l'autre,
- espacés l'un de l'autre, et
- au moins partiellement divergents (2,3; 6,7; 10,11),
lesquels bras de cadran sont numérotés avec des grandeurs physiques et il se trouve parmi les bras de cadran numérotés (1 à 16) au moins les deux catégories suivantes de bras de cadran
(a) **au moins un** bras de cadran de grandeurs de résultat (5 à 9) pour la représentation d'une grandeur de résultat du composant extrudé (20) ou issue du procédé d'extrusion, lequel bras de cadran représente un résultat physique sous la forme d'une propriété physique du composant (20), comme une mesure d'une paroi (21, 22), ou d'une grandeur de processus du procédé, comme une viscosité (6) ou une température (5) au cours du procédé de production par extrusion;
(b) **au moins deux** bras de cadran de grandeurs de réglage autonomes (14 à 16, 1 à 4) pour le procédé de production par extrusion, qui représentent des grandeurs de procédé non identiques, dont chacune d'elles peut être prédéterminée par un réglage particulier dans le procédé de production et apparaît ou est mesurable dans le procédé de production;
afin de fixer avec lesdits **au moins trois bras de cadran** (1 à 9, 14 à 16) **un premier niveau** (39, 34, 34a, 34b) du dispositif de représentation (38), qui se distingue optiquement par rapport à un champ ambiant intérieur et un champ ambiant extérieur (35, 36); et
afin d'autoriser ou de permettre ou de faciliter ou d'étendre une action influençant le processus à partir d'au moins le premier niveau (39, 34), dans lequel on choisit une action influençant le processus dans le groupe: réglage, préréglage, surveillance, commande, modification, optimisation, fabrication d'échantillon, analyse.

2. Procédé selon la revendication 1, dans lequel, dans le cadre d'une préparation de données de processus pour influencer le processus, on calcule de nouveau une quantité de paramètres du procédé de production et/ou du composant extrudé (20) en vue d'une mémorisation dans une mémoire de données (38a) d'une banque de données, et on les reporte sur les bras de cadran représentés (1 à 16), de telle manière qu'il se forme un niveau prévisionnel.

3. Procédé selon l'une quelconque des revendications précédentes, dans lequel on reporte sur les bras de cadran représentés (1 à 16) une quantité de paramètres du procédé de production et/ou du composant extrudé (20), pour autant qu'ils soient mémorisés dans une mémoire de données (38a) d'une banque de données, afin de former le premier niveau.

4. Procédé selon la revendication 3, dans lequel on forme un bord extérieur continu et un bord intérieur continu (39a, 39b), en reliant tous les maxima respectivement les minima des paramètres, qui ont été reportés sur les bras de cadran (1 à 16), et on forme le premier niveau (39) à l'intérieur des bords par le fait qu'on le met en évidence sur l'écran d'affichage de façon contrastée par rapport aux champs ambiants intérieur et extérieur (35, 36) à l'extérieur des bords.

5. Procédé selon la revendication 3, dans lequel
dans la quantité de paramètres du procédé de production et/ou du composant extrudé (20), on relie par une ligne les uns aux autres des paramètres respectivement correspondants,
dans lequel des paramètres respectivement correspondants décrivent ou définissent un état du procédé de production et/ou du composant extrudé (20),
et le premier niveau (34, 34a, 34b) est déjà mis en évidence de façon contrastée par la multiplicité des lignes.

6. Procédé selon la revendication 1, dans lequel il est prévu au moins trois bras de cadran de la même catégorie, et on représente avec ceux-ci un autre niveau particulier (31, 32) du dispositif de représentation (38), **sans** représenter les bras de cadran ne faisant respectivement pas partie de la même catégorie.

7. Procédé selon la revendication 6, dans lequel lesdits au moins trois bras de cadran (5 à 9) appartiennent à la catégorie des grandeurs de résultat, pour la formation d'un niveau particulier contrasté de grandeurs de résultat (32).

8. Procédé selon la revendication 6 ou 7, dans lequel lesdits au moins trois bras de cadran (2, 3, 4) appartiennent à la catégorie des grandeurs de réglage, pour la formation d'un niveau particulier contrasté de grandeurs de réglage (31).

9. Procédé selon la revendication 6, 7 ou 8, dans lequel lesdits au moins trois bras de cadran appartiennent à une catégorie des grandeurs de perturbation, pour la formation d'un niveau particulier contrasté de grandeurs de perturbation (33, 33a).

10. Procédé selon la revendication 1, dans lequel les grandeurs physiques de la numérotation des bras de cadran sont au moins en partie des indications qualitatives ou des unités en tant qu'indications quantitatives.

11. Procédé selon la revendication 1, dans lequel les grandeurs physiques sont des grandeurs quantitatives dans le sens d'unités physiques, comme la température, la pression, la hauteur ou la largeur.

12. Procédé selon la revendication 1, dans lequel les grandeurs physiques sont des grandeurs qualitatives dans le sens d'indications forfaitaires.

13. Procédé selon la revendication 1, dans lequel les grandeurs physiques sont des valeurs prédéfinies pour le procédé de production, comme le type de granulat pour le procédé de production par extrusion ou la proportion de recyclage dans le granulat ou la couleur du composant extrudé (20).

14. Procédé selon la revendication 1, dans lequel on représente au moins un autre bras de cadran (10 à 13) numéroté avec des grandeurs physiques
- non situés l'un sur l'autre,
et
- espacés des autres bras de cadran (5 à 9, 14 à 16, 1 à 4),
du dispositif de représentation (38),
lequel autre bras de cadran (10 à 13) représente une grandeur de perturbation, qui survient dans le procédé de production par extrusion, sans être occasionnée directement ou provoquée par une grandeur de résultat ou une des grandeurs de réglage.

15. Procédé selon la revendication 1, dans lequel les bras de cadran de grandeurs de réglage (14 à 16, 1 à 4) pour le procédé de production par extrusion représentent au moins deux grandeurs de processus non identiques et non dépendantes linéairement.

16. Procédé selon la revendication 12, dans lequel les indications sont "haut", "plat" et "normal" ou "sec", "standard" et "humide".

17. Procédé selon l'une quelconque des revendications précédentes 1 à 16, dans lequel on opère le choix d'un ou de plusieurs états du procédé de production et/ou du composant extrudé par un placement d'un ou de plusieurs symboles graphiques au moyen d'un pointeur sur un ou plusieurs des bras de cadran, pour la fixation de restrictions à respecter et pour la formation d'un corridor contrasté.

18. Procédé selon l'une quelconque des revendications précédentes 1 à 16, dans lequel on opère le choix d'un ou de plusieurs états du procédé de production et/ou du composant extrudé par une entrée de paramètres librement choisis pour la limitation de la grandeur physique respective au moyen du clavier, pour la fixation de restrictions à respecter et pour la formation d'une quantité partielle d'états restreints.

19. Procédé selon l'une quelconque des revendications précédentes 1 à 18, dans lequel on opère le choix d'un ou de plusieurs états du procédé de production et/ou du composant extrudé par le placement d'un ou de plusieurs symboles graphiques au moyen d'un pointeur sur un ou plusieurs des bras de cadran, pour la fixation de valeurs prédéfinies à approcher et pour la formation d'un corridor contrasté.

20. Procédé selon l'une quelconque des revendications précédentes, dans lequel on opère le choix d'un ou de plusieurs états du procédé de production et/ou du composant extrudé par l'entrée de paramètres librement choisis pour une valeur prédéfinie de la grandeur physique respective au moyen du clavier en tant qu'appareil d'entrée, pour la fixation de valeurs prédéfinies à approcher et pour la formation d'une quantité partielle d'états restreints.

21. Procédé selon l'une quelconque des revendications précédentes 1 à 16, dans lequel on opère la focalisation sur un état du procédé de production et/ou du composant extrudé par le marquage d'un groupe de paramètres correspondants de l'état désiré, reliés les uns aux autres par des lignes, au moyen d'un pointeur.

22. Procédé selon l'une quelconque des revendications précédentes 1 à 16, dans lequel on opère la focalisation sur un état du procédé de production et/ou du composant extrudé par l'entrée ou le choix du numéro de jeu de données d'un état souhaité mémorisé dans une banque de données, au moyen d'un clavier.

23. Procédé selon l'une quelconque des revendications précédentes 1 à 16, dans lequel on effectue le calcul d'une quantité d'approximations - de préférence par interpolation ou par extrapolation - pour l'état du procédé de production et/ou du composant extrudé en utilisant un état choisi et d'autres états proches de celui-ci par des procédés de la conception expérimentale.

24. Procédé selon l'une quelconque des revendications précédentes 1 à 18, dans lequel on opère le choix d'au moins un état **du procédé de production** par le placement d'au moins un symbole graphique au moyen d'un pointeur sur au moins un des multiples bras de cadran, pour la fixation d'une valeur prédéfinie à approcher et ainsi pour la détermination d'un nouveau corridor contrasté dans le niveau de l'action influençant le processus.

25. Procédé selon l'une quelconque des revendications précédentes 1 à 18 ou 24, dans lequel on opère le choix d'au moins un état **du composant extrudé** par le placement d'au moins un symbole graphique au moyen d'un pointeur sur au moins un des multiples bras de cadran, pour la fixation d'une valeur prédéfinie à approcher et ainsi pour la détermination d'un nouveau corridor contrasté dans le niveau de l'action influençant le processus.

26. Procédé selon la revendication 2, dans lequel on calcule de nouveau la quantité de paramètres nouvellement calculés du procédé de production sur la base de paramètres déjà mémorisés ou par approximations par un procédé connu de la conception expérimentale.

27. Procédé selon la revendication 1, dans lequel le composant extrudé est une goulotte de câbles au moins partiellement en forme de caisson en section transversale.

28. **Représentation par affichage** destinée à permettre une action influençant un processus avec un réglage, un préréglage, une surveillance, une commande, une modification, une optimisation, une fabrication d'échantillon, une analyse, dans un procédé de production par extrusion d'un composant extrudé très allongé (20), en particulier d'une goulotte de câbles au moins partiellement en forme de caisson,
dans laquelle, pour l'action influençant le processus, une multiplicité de bras de cadran (1 à 16) d'un dispositif de représentation (38)
- non situés l'un sur l'autre,
- espacés l'un de l'autre, et
- au moins partiellement divergents (2,3; 6,7; 10,11),
sont représentés avec un affichage optique,
lesquels bras de cadran sont numérotés avec des grandeurs physiques et il se trouve parmi les bras de cadran numérotés (1 à 16) au moins les deux catégories suivantes de bras de cadran,
(a) **au moins un** bras de cadran de grandeurs de résultat (5 à 9) pour la représentation d'une grandeur de résultat du composant extrudé (20) ou issue du procédé d'extrusion, lequel bras de cadran représente un résultat physique en tant que propriété physique du composant ou une grandeur de processus du procédé, comme une mesure d'une paroi (21, 22) du composant, une viscosité (6) ou une température (5) au cours du procédé de production par extrusion;
(b) **au moins deux** bras de cadran de grandeurs de réglage autonomes (14 à 16, 1 à 4) pour le procédé de production par extrusion, qui représentent des grandeurs de procédé non identiques, dont chacune d'elles peut être prédéterminée par un réglage particulier dans le procédé de production afin d'apparaître ou d'être mesurable dans le procédé de production;
dans laquelle **un premier niveau** (39, 34, 34a, 34b) est fixé sur l'affichage optique du dispositif de représentation (38) au moyen desdits **au moins trois bras de cadran** (5 à 9, 14 à 16, 1 à 4), lequel se distingue optiquement sur l'affichage par rapport à un champ ambiant intérieur et un champ ambiant extérieur (35, 36).

29. Représentation par affichage selon la revendication 28, dans laquelle les bras de cadran de grandeurs de réglage (14 à 16, 1 à 4) pour le procédé de production par extrusion représentent au moins deux grandeurs de procédé non identiques et non dépendantes linéairement.
